(19) Europäisches Patentamt
European Patent Office
Office européen des brevets

(11) **EP 3 329 492 B1**

(12) **FASCICULE DE BREVET EUROPEEN**

(45) Date de publication et mention
de la délivrance du brevet:
**01.05.2019 Bulletin 2019/18**

(51) Int Cl.:
***G21B 1/19*** *(2006.01)*  ***H05H 3/06*** *(2006.01)*
***H05H 6/00*** *(2006.01)*

(21) Numéro de dépôt: **16742291.4**

(22) Date de dépôt: **22.07.2016**

(86) Numéro de dépôt international:
**PCT/EP2016/067510**

(87) Numéro de publication internationale:
**WO 2017/021174 (09.02.2017 Gazette 2017/06)**

(54) **DISPOSITIF ET PROCEDE DE PRODUCTION DE NEUTRONS**

VORRICHTUNG UND VERFAHREN ZUR ERZEUGUNG VON NEUTRONEN

DEVICE AND METHOD FOR GENERATING NEUTRONS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.07.2015 FR 1557374**

(43) Date de publication de la demande:
**06.06.2018 Bulletin 2018/23**

(73) Titulaire: **Neusca SAS
77300 Fontainebleau (FR)**

(72) Inventeur: **MOFAKHAMI, Arash
77760 Buthiers (FR)**

(74) Mandataire: **Nony
11 rue Saint-Georges
75009 Paris (FR)**

(56) Documents cités:
WO-A1-2011/064739    GB-A- 795 596
US-A1- 2011 260 043

• KUNNE F ED - ULLRICH THOMAS ET AL:
"Physics with polarized proton and electron
collisions at HERA", NUCLEAR PHYSICS,
NORTH-HOLLAND, AMSTERDAM, NL, vol. A622,
no. 1-2, 25 août 1997 (1997-08-25), pages 110-123,
XP002592005, ISSN: 0375-9474
• "UNIT 1: PARTICLE PHYSICS - Interactions and
Conservation", INTERNET CITATION, 1 janvier
2008 (2008-01-01), pages 1-7, XP002592004,
Extrait de l'Internet:
URL:http://www.parrswood.net/faculties/sci
ence/particlephysics_fundamental_forces_in
teractions.html [extrait le 2010-07-14]
• FARAUDO ET AL.: "Understanding diluted
dispersions of superparamagnetic particles
under strong magnetic fields: a review of
concepts, theory and simulations", SOFT
MATTER, [Online] vol. 9, 22 mars 2013
(2013-03-22), pages 6654-6664, XP002762276,
DOI: 10.1039/C3SM00132F Extrait de l'Internet:
URL:http://pubs.rsc.org/en/content/article
pdf/2013/SM/C3SM00132F> [extrait le
2016-09-26]

**Description**

La présente invention concerne notamment les dispositifs et procédés pour produire et/ou capturer des neutrons.

**Arrière-plan**

Il est connu de produire des neutrons par une réaction de fission nucléaire. Cette technologie a comme inconvénient de nécessiter un encadrement très important au regard des risques que représente la réaction de fission nucléaire ainsi qu'une consommation importante d'énergie.

Une autre technologie utilisée pour la production de neutrons est la spallation, c'est-à-dire l'interaction de photons énergétiques, particules énergétiques ou noyaux légers fortement accélérés (de l'ordre du MeV au GeV) avec des noyaux lourds et/ou riches en neutrons. L'impact du faisceau énergétique incident (proton, électron ou photons) sur ces noyaux libère les neutrons en fissionnant les noyaux ou en arrachant les neutrons excédentaires dans un cône directionnel. Cette technologie nécessite comme pour la réaction nucléaire un dispositif lourd et des investissements considérables pour pouvoir atteindre des productions importantes, de l'ordre de $10^{15}$ neutrons/cm$^2$.s par exemple. Le danger radioactif est plus faible mais les rendements le sont aussi, avec un coût élevé pour la réalisation des cibles qui ont une durée de vie relativement faible (moins de 2000 heures généralement), et une énergie importante consommée par le faisceau de particules incidentes, en général des protons, ce qui explique que cette technologie soit très coûteuse.

La demande internationale WO 2011/064739 décrit un procédé de génération de neutrons basé sur collisions entre faisceaux de noyaux et d'électrons. La demande internationale WO 2009/052330 décrit un procédé de génération de neutrons comportant une étape de collision d'un faisceau d'ions et de noyaux. Les noyaux ont le même état de spin que les ions.

La demande internationale WO 99/05683 décrit un procédé électrochimique de capture électronique par des protons afin de former des neutrons.

La demande EP 2 360 997 divulgue un procédé pour générer des neutrons, dans lequel on fait entrer en collision un faisceau de noyaux et un faisceau d'électrons. Il est donc nécessaire de produire dans un premier temps des faisceaux d'électrons et de noyaux. Le dispositif utilisé peut donc être relativement complexe, encombrant et coûteux. En outre, le rendement peut être insuffisant dans la mesure où les neutrons produits doivent être utilisés en dehors du dispositif, ce qui peut générer d'importantes pertes.

La demande de brevet US 2014/0326711 porte sur un procédé de production de chaleur, dans lequel on fait réagir dans une enceinte étanche du nickel et de l'hydrogène.

Il existe un besoin pour diminuer le coût économique et énergétique et faciliter la production et la capture de neutrons.

**Procédé**

Selon un premier de ses aspects, l'invention a ainsi pour objet un procédé de production et/ou de capture de neutrons, comportant les étapes suivantes :

a) Soumettre des noyaux choisis parmi les protons (noyaux d'hydrogène), deutérons (noyaux de deutérium) et/ou tritons (noyaux de tritium) à un champ électrique afin d'extraire lesdits noyaux et diriger les noyaux ainsi extraits vers une cible contenant des électrons libres,
b) Soumettre lesdits noyaux à un gradient spatial et/ou temporel d'un premier champ magnétique de manière à donner une orientation prédéfinie aux moments magnétiques des noyaux, notamment durant leur accélération vers la cible,
c) Soumettre la cible à un deuxième champ magnétique de manière à donner une orientation prédéfinie aux moments magnétiques des électrons libres de la cible.

Les moments magnétiques des électrons et des noyaux peuvent être alignés dans le même sens. Ils peuvent être parallèles au sens de déplacement des noyaux vers la cible, étant dans le même sens ou dans le sens opposé. Ils peuvent être ainsi colinéaires avec l'axe du faisceau de noyaux extraits à l'étape b). Pour obtenir un tel alignement, les champs magnétiques utilisés peuvent être axiaux, ayant leur axe confondu avec l'axe du faisceau de noyaux.

On peut provoquer ainsi la génération de neutrons par collision. Les neutrons ainsi produits peuvent alors être capturés par les noyaux constitutifs de la cible, ce qui induit la transmutation de ces mêmes noyaux par capture neutronique.

Par « électrons libres », on entend les électrons des couches de conduction de la cible, qui sont faiblement liés aux atomes de la cible et qui peuvent participer, de ce fait, à la circulation de l'électricité. La couche qui contient ces électrons libres peut couvrir la cible sur une épaisseur de quelques nanomètre à quelques micromètre au moins du côté du faisceau de noyaux.

Par « moment magnétique », on entend le moment magnétique intrinsèque de la particule, à savoir le noyau ou l'électron. Ces particules sont dotées de charges et de moments magnétiques.

Les électrons qui ont été orientés par le(s) champ(s) magnétique(s), champ magnétique extérieur ou champs magnétiques engendrés par les matériaux super paramagnétiques de la cible elle-même, peuvent provenir des atomes constitutifs de la cible, c'est-à-dire par exemple des atomes à transmuter eux-mêmes, ou bien en variante, d'atomes spécifiques ajoutés à cet effet sur la cible ou dans la cible, par exemple des donneurs d'électrons. Ces donneurs d'électrons peuvent également jouer le rôle d'amplificateur de champ magnétique localement. En effet, certains matériaux cibles, préférentiellement chauffés au-delà de leurs températures de Curie, peuvent participer à accentuer le gradient du champ magnétique localement sous l'effet combiné de leur magnétisme propre et du champ magnétique externe imposé. Ainsi les moments magnétiques des électrons peuvent être au moins localement alignés, sous l'effet des gradients des champs magnétiques combinés, avec les moments magnétique des noyaux incidents, ce qui permet alors la génération des neutrons par capture électronique.

La cible peut avoir des propriétés super paramagnétiques.

Par « propriétés super paramagnétiques », on entend que la cible comporte un ou plusieurs matériaux superparamagnétiques. Le superparamagnétisme est un comportement des matériaux ferromagnétiques ou ferrimagnétiques qui apparaît lorsqu'ils sont sous la forme de petits grains ou nanoparticules. Dans des grains de taille suffisamment petite, l'aimantation peut se renverser spontanément sous l'influence de la température. Le temps moyen entre deux renversements est appelé temps de relaxation de Néel. En l'absence de champ magnétique appliqué, si le temps utilisé pour mesurer l'aimantation de ces grains est beaucoup plus grand que le temps de relaxation de Néel, leur aimantation apparaît nulle : on dit qu'ils sont dans un état superparamagnétique. Dans cet état, un champ extérieur peut aimanter les grains, comme dans un matériau paramagnétique. Néanmoins, la susceptibilité magnétique de grains superparamagnétiques est beaucoup plus grande que celle des matériaux paramagnétiques.

Dans le cas où la cible a des propriétés superparamagnétiques, on peut soumettre la cible à une température suffisante pour enclencher ses propriétés de super paramagnétisme. Quand la cible ayant des propriétés superparamagnétiques, le chauffage de la cible permet d'enclencher ses propriétés de superparamagnétiques.

Dans le cas où la cible a des propriétés superparamagnétiques, on peut encore soumettre la cible à un deuxième champ magnétique de manière à donner une orientation prédéfinie aux moments magnétiques des électrons libres de la cible. Une telle exposition à un deuxième champ magnétique peut permettre de donner une direction privilégiée à l'orientation des nanoparticules magnétisées. Cette direction privilégiée peut par exemple être la direction du faisceau de protons incidents ou la direction inverse du faisceau de protons.

Les neutrons ainsi produits entrent ensuite en interaction avec la cible, laquelle peut être métallique ou non métallique et recouverte par une couche métallique ou conductrice, de préférence ferromagnétique, voir superparamagnétique. Dans le cas d'une cible non métallique, la présence de la couche métallique ou conductrice apporte les électrons nécessaires ainsi qu'une augmentation du gradient du champ magnétique local si cette couche est ferromagnétique, voir superparamagnétique, pour orienter de manière plus efficace les moments magnétiques des électrons liés.

La capture électronique par les noyaux incidents est induite par l'orientation des moments magnétiques des particules en interaction. Ceci permet alors de générer des neutrons froids, thermiques, lents ou rapides selon l'intensité du potentiel appliqué pour extraire et accélérer les noyaux incidents.

On peut ainsi obtenir dans le procédé selon l'invention une production de neutrons dans la cible par capture électronique induite d'un électron par le noyau incident, suivie immédiatement de la capture des neutrons produits par les noyaux de la cible elle-même. Ce procédé peut être utilisé pour produire de l'énergie, pour produire des isotopes, ou pour transmuter des déchets nucléaires.

Un avantage de l'invention est donc que la production de neutrons peut avoir lieu *in-situ* dans la cible, sans qu'une partie importante des neutrons soit perdue comme c'est le cas avec des sources de neutrons *ex-situ*. Un autre avantage est la production de ces neutrons avec un coût énergétique faible grâce au procédé d'alignement des moments magnétiques des particules, notamment parallèlement à l'axe du faisceau des noyaux.

Par ailleurs, l'énergie des noyaux incidents peut être variable. Elle peut être réglable, notamment dans l'intervalle compris entre 1 $\mu$eV et 25 MeV, mieux entre 0,025 eV et 10 keV, voire mieux entre 0,01 eV et 0,4 eV.

L'expression « donner une orientation prédéfinie aux moments magnétiques », également nommée « polarisation », signifie que le gradient du champ magnétique oriente les moments magnétiques intrinsèques des particules (noyaux et électrons, préférentiellement les électrons) dans la direction de variation du champ et du faisceau de noyaux. Cette orientation peut concerner au moins 0,01%, voire au moins 1%, voire au moins 10%, voire au moins 50%, ou même sensiblement la totalité, des particules entrant en interaction sous le ou les champs magnétiques.

Les moments magnétiques des noyaux et des électrons peuvent être orientés dans la direction du gradient du premier champ magnétique. Le gradient du premier champ magnétique peut être lui-même orienté selon l'axe du faisceau de noyaux.

L'énergie des neutrons produits peut être comprise entre 1 $\mu$eV et 25 MeV, de préférence entre 0,025 eV et 10 keV et mieux encore entre 0,01 eV et 0,4 eV. Cette énergie peut dépendre de l'impulsion communiquée aux noyaux incidents, et en particulier du potentiel électrique appliqué pour extraire les noyaux mis enjeu dans la réaction de capture électronique.

Selon un autre de ses aspects, l'invention a également pour objet un procédé de production et/ou de capture de neutrons, comportant les étapes suivantes :

a) Soumettre des noyaux choisis parmi les protons (noyaux d'hydrogène), deutérons (noyaux de deutérium) et/ou tritons (noyaux de tritium) à un champ électrique afin d'extraire lesdits noyaux et diriger les noyaux ainsi extraits vers une cible contenant des électrons libres,

b) Soumettre lesdits noyaux à un gradient spatial et/ou temporel d'un premier champ magnétique de manière à donner une orientation prédéfinie aux moments magnétiques des noyaux, notamment durant leur accélération vers la cible,

c) Soumettre la cible à une température suffisante pour enclencher ses propriétés de super paramagnétisme, la cible ayant des propriétés superparamagnétiques.

Dans le cas où la cible a des propriétés superparamagnétiques, le chauffage de la cible permet d'enclencher ses propriétés de superparamagnétiques.

Dans le cas où la cible a des propriétés superparamagnétiques, on peut encore soumettre la cible à un deuxième champ magnétique de manière à donner une orientation prédéfinie aux moments magnétiques des électrons libres de la cible. Une telle exposition à un deuxième champ magnétique peut permettre de donner une direction privilégiée à l'orientation des nanoparticules magnétisées. Cette direction privilégiée peut par exemple être la direction du faisceau de protons incidents ou la direction inverse du faisceau de protons.

Noyaux incidents

Les noyaux peuvent être obtenus en créant un plasma d'hydrogène et/ou de deutérium et/ou de tritium par application de radiofréquences, lesquelles seront décrites plus loin, ou de haute tension. La présence d'un champ magnétique intense en présence de radiofréquences conduit à un processus d'excitation du plasma à la résonance cyclotronique électronique (ECR) de type magnétron, ce qui peut permettre d'améliorer sensiblement le confinement et le maintien du plasma.

Par « plasma » il faut comprendre un ensemble d'anions et d'électrons qui sont confinés dans une région de l'espace. De préférence, on introduit un gaz neutre d'hydrogène, et/ou de deutérium et/ou de tritium dans une enceinte maintenue sous une pression contrôlée. Cette enceinte peut être maintenue sous une dépression poussée, notamment sous vide, par une pompe à vide. La pression dans l'enceinte est par exemple comprise entre $10^{-9}$ mbar et 100 mbar, mieux entre $10^{-7}$ mbar et $10^{-3}$ mbar.

En variante, le plasma peut être obtenu au moyen d'une décharge électrique. Les noyaux d'hydrogène et/ou de deutérium et/ou de tritium peuvent être obtenus par application haute tension au gaz.

En variante encore, les noyaux peuvent être obtenus au moyen d'une source de noyaux ou source de protons, qui peut par exemple être disponible dans le commerce, par exemple sous les noms commerciaux Monogan-M100, ECR ion source ou Proton source.

Dans un exemple de réalisation, on soumet le gaz d'hydrogène et/ou de deutérium et/ou de tritium à un champ de radio fréquence, lesquelles peuvent être comprises entre 10 MHz à 400 MHz, notamment sous l'influence d'un champ magnétique avec ou sans gradient, de manière à générer un plasma de ce(s) gaz.

*Nature des sources de noyaux*

Le procédé selon l'invention peut comporter, avant l'étape a), une étape de génération du faisceau de noyaux.

Comme source de noyaux utilisable dans le cadre de la présente invention, on peut citer la source enseignée dans la publication « Ion Gun Injection In Support Of Fusion Ship II Research And Development » de MILEY *et al.* ou « Modified extraction geometry in a radio-frequency ion source » de Kiss *et al.*

Les sources de noyaux peuvent comporter en leur sein tout type d'accélérateur de noyaux utilisable comme les accélérateurs rectilignes ou linéaires, les accélérateurs circulaires comme les cyclotrons ou synchrotrons.

*Caractéristiques du faisceau de noyaux*

Le faisceau de noyaux peut avoir, au moment de sa génération, un diamètre compris entre $10^{-8}$ et $10^{-1}$ m, par exemple entre $10^{-6}$ et $10^{-1}$ m, par exemple entre $5.10^{-4}$ et $5.10^{-2}$ m. Par « diamètre d'un faisceau », il faut comprendre la plus grande dimension dudit faisceau en section transversale.

Le faisceau de noyaux peut avoir un flux compris entre $10^9$ et $10^{23}$ noyaux/s.

Au moins 50 %, par exemple au moins 75 %, par exemple sensiblement la totalité des noyaux constituant le faisceau de noyaux, peuvent avoir une énergie comprise entre 1 $\mu$eV et 25 MeV, par exemple entre 0,025 eV et 10 keV, par exemple entre 0,01 eV et 100 eV.

Le faisceau de noyaux peut être émis de manière continue. En variante, le faisceau de noyaux peut être pulsé. Par « faisceau pulsé », il faut comprendre que le faisceau est émis sous la forme d'impulsions de durée par exemple inférieure ou égale à une seconde, voire à 1 ms , par exemple à 1 $\mu$s, par exemple à 1 ns, par exemple inférieure ou égale à 10 ps voire même inférieure à 1 ps. Les impulsions ont par exemple une durée comprise entre 1 ps et 1 ms. La durée séparant deux impulsions successives est par exemple inférieure ou égale à 1ms, par exemple à 1$\mu$s, par exemple inférieure ou égale à 1ps.

L'extraction pulsée peut notamment permettre de limiter les interactions perturbatrices entre les particules excédentaires ayant reformées des atomes et/ou des molécules dans l'enceinte sous vide avec les noyaux du faisceau.

Lorsque le faisceau de noyaux est pulsé, le nombre de neutrons générés par impulsion peut par exemple être compris entre 1 et $10^{19}$ neutron/cm$^2$ par impulsion, voire entre $10^6$ et $10^{17}$ neutron/cm$^2$ par impulsion, mieux entre $10^{12}$ et $10^{15}$ neutron/cm$^2$ par impulsion.

La production de neutrons peut être effectuée sous forme continue ou sous forme puisée.

Dans le cas où la cible contient des matériaux ferromagnétiques et/ou superparamagnétique, on peut soumettre la cible à un champ magnétique de manière à donner une orientation prédéfinie aux moments magnétique des électrons libres de la cible.

### Radio fréquences

On peut soumettre lesdits noyaux à des radiofréquences de manière à donner une orientation prédéfinie aux moments magnétiques des noyaux. L'application de ces radiofréquences peut permettre notamment de donner une orientation aux moments magnétique des noyaux mal orientés dans la direction souhaitée. Ces radiofréquences peuvent par exemple être de l'ordre de 40 MHz.

On peut soumettre la cible à des radiofréquences de manière à donner une orientation prédéfinie aux moments magnétiques des électrons libres de la cible. L'application de ces radiofréquences peut permettre notamment de donner une orientation aux moments magnétique des électrons libres de la cible mal orientés dans la direction souhaitée. Ces radiofréquences peuvent par exemple être de l'ordre de 25 GHz.

L'expression « soumettre à des radiofréquences » doit se comprendre comme signifiant « soumettre à un rayonnement radiofréquence ».

La fréquence des radiofréquences est particulièrement dépendante de l'intensité des champs magnétiques en jeu ainsi que du type de faisceau (électron, proton, deuton ou triton). On peut appliquer les radiofréquences à l'aide d'un générateur de radiofréquences, à une fréquence comprise entre 10 kHz et 50 GHz, mieux entre 50 kHz et 50 GHz. Les radiofréquences produites peuvent être comprise entre 10 MHz et 25 GHz, voire entre 100 MHz et 2,5 GHz, étant par exemple de l'ordre de 45 MHz. Les radiofréquences peuvent être appliquées au moyen d'une antenne d'un générateur de radiofréquences entourant l'enceinte ou d'une antenne qui est placée à l'intérieur de l'enceinte pour chaque faisceau de noyaux et/ou d'électrons. L'orientation d'émission des radiofréquences peut être perpendiculaire ou parallèle à l'axe du faisceau de noyaux.

Les radiofréquences utilisées pour produire le plasma peuvent être comprises entre 1 MHz et 10 GHz, voire entre 10 MHz et 1 GHz, mieux entre 100 MHz et 700 MHz, étant par exemple de l'ordre de 200 MHz.

### Champs magnétiques

Le premier champ magnétique appliqué peut avoir une intensité comprise entre 0,005 Tesla et 25 Tesla, voire une intensité comprise entre 0,1 Tesla et 1 Tesla, et un gradient spatial compris entre 0,001 Tesla/mètre et 1000 Tesla/mètre, voire entre 0,01 Tesla/mètre et 100 Tesla/mètre, sur le volume d'une enceinte contenant lesdits noyaux, avec par exemple une variation de l'ordre de 10 Tesla/mètre sur le volume de l'enceinte.

En variante, le premier champ magnétique est variable dans le temps, par la fréquence et/ou la forme du signal. L'intensité maximum du premier champ magnétique produit peut être comprise entre 0,005 Tesla et 25 Tesla. Au sein de l'enceinte, le gradient est par exemple compris entre 0,1 T/m et 1000 T/m.

Dans la mesure où l'orientation des moments magnétiques des particules dépendent du gradient du champ magnétique sur la totalité de la cible, pour maitriser ce gradient sur toute la cible il est peut être utile de disposer de bobines complémentaires le cas échéant pour corriger le gradient qui peut être obtenu par une seule ou deux bobine(s) disposées sur le même axe. Ainsi la forme du gradient du champ magnétique pourra être modifiée selon la taille et la forme des cibles.

Le premier champ magnétique produit peut l'être au moyen d'un ou plusieurs aimants permanents ou de un ou plusieurs électroaimants. Le premier champ magnétique peut par exemple être généré par un courant variable ayant la forme sinusoïdale ou une forme en crête. Le générateur électrique associé à l'électro-aimant peut par exemple produire une tension continue et/ou une tension variable à des fréquences comprises entre 1 Hz et 25 MHz. L'application de ce premier champ magnétique permet l'orientation des moments magnétique des noyaux.

Les électrons libres de la cible peuvent être soumis à un gradient spatial et/ou temporel du deuxième champ magnétique Ainsi, le deuxième champ magnétique peut avoir un gradient spatial et/ou temporel. En variante, ce deuxième champ magnétique peut être constant temporellement et/ou spatialement. Le deuxième champ magnétique peut avoir un gradient spatial compris entre 0,01 T/m et 1000 T/m dans le volume de la cible contenant lesdits électrons, étant par exemple de l'ordre de 10 T/m dans le volume de la cible. En variante, le deuxième champ magnétique est variable dans le temps, par la fréquence et/ou la forme du signal. L'intensité du deuxième champ magnétique produit peut être comprise entre 0,005 Tesla et 25 Tesla.

Le deuxième champ magnétique produit peut l'être au moyen de un ou plusieurs aimants permanents ou de un ou plusieurs électroaimants, ou encore d'un générateur de radiofréquence, ou encore une combinaison de ceux-ci. Le deuxième champ magnétique peut par exemple être généré par un courant variable ayant la forme sinusoïdale ou une forme en crête. Le générateur électrique associé à l'électro-aimant peut par exemple produire une tension continue et/ou une tension variable à des fréquences comprises entre 1 Hz et 25 MHz. L'application de ce deuxième champ magnétique permet l'orientation des moments magnétiques des électrons.

Le premier et/ou le deuxième champ magnétique peuvent être produits par des électro-aimants avec une alimentation pilotée par un générateur de signaux. Les signaux peuvent être des signaux carrés, sinusoïdaux, redressés, par exemple générés par des thyristors, par exemple avec un pont de Graetz. On peut par exemple utiliser les tensions et courants sortants du pont de Graetz, avec l'angle de retard des thyristors égal à 20°, comme illustré sur la page internet *https://fr.wikipedia.org/wiki/Thyristor.* Les courants de ce type peuvent générer des variations temporelles de champ magnétique.

Le ou les électro-aimants peuvent être avec ou sans noyau ferromagnétique, par exemple un électroaimant avec noyau et un autre sans noyau, ce qui peut permettre de favoriser l'obtention d'un gradient spatial du champ magnétique.

Dans un autre mode de réalisation, le noyau de l'électroaimant peut être percé pour alimenter le plasma en gaz. Dans un autre mode de réalisation, l'arrivée de gaz peut se faire à travers la paroi de l'enceinte.

Le premier et/ou le deuxième champ magnétique peuvent être accompagnés d'une génération de fréquences, par exemple comprises entre 1Hz à 25MHz. La ou les applications de radiofréquences peuvent apporter une aide complémentaire à l'orientation des moments magnétiques des électrons et des noyaux et permettre ainsi une augmentation du rendement du procédé de l'invention. Les radiofréquences peuvent être comprises entre 1 MHz et 50 GHz, par exemple à 42 MHz pour les noyaux et à 25 GHz pour les électrons sous un champ magnétique de 1 Tesla environ. Les fréquences dépendent du champ magnétique appliqué.

Selon une autre variante de réalisation de l'invention, une seule bobine peut générer un champ magnétique qui remplace les deux champs magnétiques. Cette bobine peut être une bobine avec ou sans noyau.

Champ électrique et différence de potentiel

Le champ électrique appliqué, notamment sur le plasma, peut être obtenue par une ou plusieurs électrode(s), notamment un couple d'électrodes anode/masse ou masse/cathode, afin de soumettre les noyaux à une différence de potentiel électrique.

Le couple d'électrodes peut être porté par un porte-électrode. L'électrode et la masse peuvent être de forme identique, à leur polarité près. Le porte-électrode peut avoir une forme de couronne, comportant deux logements pour l'électrode et la masse, qui peuvent être de forme identique.

En outre, le porte-électrode peut être percé d'orifices radiaux, au nombre de deux par exemple, et qui peuvent être diamétralement opposés. Ces orifices radiaux peuvent servir à la fixation du porte-électrode dans le dispositif.

Le porte-électrode peut comporter également des orifices transversaux. Des orifices transversaux peuvent servir au passage de connexions électriques, sur les côtés de l'enceinte, étant les plus éloignés de l'axe central de l'enceinte. Ces orifices transversaux peuvent également être de plus petit diamètre. Ils peuvent être au nombre de six, étant disposés symétriquement autour de l'axe central de l'enceinte.

Des orifices transversaux peuvent également servir au passage d'entretoises, lesquelles permettent le maintien des électrodes et du support de la cible. Ces entretoises peuvent être utilisées pour la circulation d'un ou plusieurs fluide(s) caloporteur(s) et l'extraction de la chaleur produite dans le dispositif. Ils peuvent être au nombre de quatre, de même que les entretoises, et peuvent être disposés symétriquement autour de l'axe central de l'enceinte.

Enfin, d'autres orifices transversaux peuvent être maintenus libres, pouvant servir ainsi à l'équilibre des pressions dans le dispositif et à la circulation des gaz. Ils peuvent être au nombre de six, pouvant être disposés symétriquement autour de l'axe central de l'enceinte.

Ce couple d'électrodes peut être disposé à une distance prédéfinie du plasma, de préférence à proximité immédiate de celui-ci, et/ou à une distance prédéfinie de la cible. La distance avec la cible peut être comprise entre 1 mm et 1 m, étant par exemple de l'ordre de 60 mm.

L'électrode anode du plasma peut être portée à un potentiel compris entre 0 V et 10 000 V, étant par exemple de l'ordre de 6 kV. Le champ électrique peut être compris entre 100 V/m et 10 MV/m, étant par exemple de l'ordre de 1 MV/m. Plusieurs couple d'électrodes peuvent être utilisées afin d'augmenter l'impulsion des noyaux sur la cible.

En variante, on peut utiliser pour le plasma une cathode et la masse. La cathode peut alors être portée à un potentiel compris entre 0 V et -10 000 V, étant par exemple de l'ordre de -6 kV.

La tension anodique ou cathodique permet d'attribuer aux noyaux l'impulsion souhaitée selon les applications envisagées.

Le champ électrique appliqué, notamment sur la cible, peut être obtenu par une ou plusieurs électrode(s), notamment un couple d'électrodes masse/cathode, ou anode/masse, afin de soumettre les électrons de la cible à une différence de potentiel électrique.

Au moins l'une des électrodes peut être portée par un porte-électrode, qui peut être tel que décrit ci-dessus. L'autre électrode peut être de forme générale tronconique.

Ce couple d'électrodes peut être disposé à une distance prédéfinie de la cible, de préférence à proximité immédiate de celle-ci.

Dans une variante de réalisation, la cible peut être elle-même connectée à la masse.

En variante, on peut connecter la cible à une cathode. La cathode peut alors être portée à un potentiel compris entre 0 V et -10 000 V, mieux entre -5 V et -500 V, étant par exemple de l'ordre de -300 V. Dans ce cas, le porte-électrode précité porte la masse.

La cible ou son enceinte peut comporter au moins une connexion électrique à sa surface.

Cible

La cible peut être métallique, voire entièrement métallique, ce qui peut notamment être le cas lorsque le procédé est utilisé dans un objectif de production d'énergie.

En variante, la cible peut être non métallique, ce qui peut notamment être le cas lorsque le procédé est utilisé dans un objectif de transmutation par exemple. Dans ce cas elle peut comporter une enveloppe métallique ferromagnétique ou superparamagnétique. Elle peut par exemple comporter l'un au moins de : Fe, Ni, Mo, Co, $FeOFe_2O_3$, MnBi, Ni, MnSb, $MnOFe_2O_3$, CrO2, MnAs, Gd, Dy, EuO, U, W, cette liste n'étant pas limitative. Dans ce cas, la cible ou son enveloppe métallique peut être reliée à la cathode ou à la masse, comme expliqué plus haut.

La cible peut être solide, liquide ou gazeuse. Elle peut par exemple comprendre au moins des nano particules, notamment dans le cas des matériaux superparamagnétiques, de la poudre, de la mousse, des matériaux poreux, des matériaux composites, et/ou des matériaux sous forme de sol-gel. Elle peut aussi contenir des matériaux métalliques et ou conducteurs électriques soumis au champ magnétique avec ou sans gradient, cette liste n'étant pas limitative.

Lorsque la cible est fluide, le fluide peut être circulant ou contenu dans un solvant circulant. Le dispositif peut comporter des moyens de mise en circulation du fluide de la cible. Ces moyens peuvent par exemple comporter une pompe, un mélangeur ou une vis sans fin. Le fluide et/ou solvant peut être choisi dans la liste suivante, qui n'est pas limitative : Mercure, Sodium Na, eau. Le solvant éventuel peut par exemple permettre de transporter de la poudre, par exemple de la poudre de Ni ou de Mo.

Dans une variante de réalisation, notamment pour la production d'énergie, la cible peut être une enceinte métallique contenant de l'eau.

La cible peut être chauffée à une température qui peut être comprise entre 100°C et 4000°C, voire entre 200°C et 2000°C, mieux entre 200°C et 1700°C, voire entre 300°C et 1500°C. On peut par exemple utiliser une résistance électrique ou une autre source de chaleur pour chauffer la cible. Un tel chauffage peut permettre d'améliorer l'orientation des moments magnétiques, notamment dans le cas où la cible contient des matériaux ferromagnétiques et/ou superparamagnétiques, des électrons de conduction de la partie métallique de la cible ou de son enveloppe métallique.

Le chauffage de la cible peut permettre aux électrons libres de celle-ci d'être moins sous l'influence du milieu matériel et donc davantage sous l'influence des champs externes. Pour augmenter le nombre d'électrons orientés, il est préférable d'augmenter la température de la cible de sorte que les électrons « libre » de la couche de Bloch soit moins en interaction ensemble et subissent d'avantage l'influence du champ externe.

Le procédé selon l'invention peut avoir un rendement de production de neutrons supérieur à $10^{-7}$. Le « rendement de production de neutrons » est défini comme : [nombre de transmutations / nombre d'électrons extraits de la cathode reliée à la cible].

Si la capture électronique induite est effectuée par des noyaux possédant eux-mêmes des neutrons, la quantité de neutrons libérés peut être plus importante que celle des neutrons créés par la capture électronique induite, par le simple fait de la libération des neutrons existants.

Le nombre de neutrons produits peut être supérieur à $10^3$ neutrons/cm$^2$.s par exemple, voire supérieur à $10^{13}$ neutrons/cm$^2$.s, mieux encore supérieur à $10^{19}$ neutrons/cm$^2$.s.

Le procédé selon l'invention peut permettre la génération d'un faisceau de neutrons. Par « faisceau », il faut comprendre un ensemble de particules, animées d'une vitesse, produit par une source dans une ou plusieurs directions spatiales donnée(s). Dans ce cas, on remplace la cible par un faisceau d'électrons.

L'invention a encore pour objet, indépendamment ou en combinaison avec ce qui précède, un procédé de contrôle de l'impulsion des neutrons produits, dans lequel on contrôle l'intensité du potentiel électrique appliqué pour extraire les noyaux. En effet, l'intensité du champ électrique d'extraction donne une impulsion plus ou moins importante aux noyaux et donc aux neutrons produits. De cette façon, il est possible de moduler l'impulsion des neutrons produits pour l'adapter aux sections efficaces optimales de capture neutronique des matériaux cibles.

Le gradient de champ magnétique peut être créé localement par la combinaison du dispositif de génération de champ magnétique et le comportement magnétique des matériaux de la cible à l'échelle nanométrique, atomique et nucléaire.

**Dispositif**

L'invention a encore pour objet, indépendamment ou en combinaison avec ce qui précède, un dispositif pour la mise en oeuvre du procédé tel que défini plus haut.

Selon un autre de ses aspects, l'invention a également pour objet un dispositif de production et/ou de capture de neutrons, par exemple pour la mise en oeuvre d'un procédé tel que décrit ci-dessus, comportant :

> a) une enceinte dans laquelle on peut disposer de noyaux choisis parmi les protons (noyaux d'hydrogène), deutérons (noyaux de deutérium) et/ou tritons (noyaux de tritium), par exemple en y introduisant un gaz neutre d'hydrogène ou de deutérium et/ou de tritium sous une pression contrôlée, par exemple par une pompe à vide,
> b) des moyens d'application d'un gradient d'un premier champ magnétique spatial et/ou temporel, de manière à donner une orientation prédéfinie aux moments magnétiques des noyaux présents dans l'enceinte,
> c) des moyens pour appliquer un champ électrique afin d'extraire lesdits noyaux et diriger les noyaux ainsi extraits vers des électrons, ces électrons pouvant être libres ou appartenir à une la cible,
> d) des moyens pour appliquer un deuxième champ magnétique auxdits électrons de manière à donner une orientation prédéfinie aux moments magnétiques des électrons.

Le dispositif peut encore comporter des moyens de chauffer la cible contenant les électrons pour activer les propriétés superparamagnétiques de la cible, dans le cas où la cible a des propriétés superparamagnétiques.

Les moments magnétiques des noyaux et les moments magnétiques des électrons libres peuvent être alignés dans le même sens, notamment dans le sens de déplacement des noyaux dans l'enceinte. Ces moments magnétiques des noyaux et des électrons libres peuvent être parallèles au sens de déplacement des noyaux dans l'enceinte, étant dans le même sens ou dans le sens opposé. Ils peuvent être ainsi colinéaires avec l'axe du faisceau de noyaux extraits à l'étape c).

Les moments magnétiques des électrons et des noyaux peuvent alors être alignés dans le même sens, ce qui peut permettre de favoriser la capture des électrons lors de leur collision. Le deuxième champ magnétique peut avoir un gradient spatial et/ou temporel. En variante, ce deuxième champ magnétique peut être constant temporellement et/ou spatialement.

Le dispositif peut comporter des moyens de générer des noyaux à partir de gaz, par exemple par la génération d'un plasma et par l'extraction des noyaux de ce plasma grâce à des moyens pour appliquer un champ électrique, et donc une différence de potentiel électrique. Le dispositif peut notamment comporter un générateur de radiofréquences entourant l'enceinte ou intégré dans l'enceinte, permettant de créer un plasma d'hydrogène ou de deutérium et/ou de tritium dans l'enceinte, comme explicité plus haut.

Les moyens pour appliquer le champ électrique peuvent comporter une ou plusieurs électrode(s) et une ou plusieurs masse(s), comme explicité plus haut. Ces moyens pour appliquer le champ électrique peuvent notamment comporter dans un premier exemple de réalisation une anode du côté de l'enceinte d'où les noyaux arrivent et une connexion à la masse du côté opposé, c'est-à-dire du côté de la cible contenant les électrons. Dans un deuxième exemple de réalisation, ces moyens pour appliquer le champ électrique peuvent comporter une connexion à la masse du côté de l'enceinte d'où les noyaux arrivent et/ou là où le plasma est produit et une connexion à une cathode du côté opposé, c'est-à-dire du côté de la cible qui contient les électrons.

Le dispositif peut notamment comporter un ou plusieurs couples d'électrodes anode/masse ou masse/cathode, chaque électrode ou couple d'électrodes étant porté par un porte-électrode.

Le porte-électrode peut avoir une forme de couronne, comportant deux logements pour l'électrode et la masse, qui peuvent être de forme identique. Le porte-électrode peut comporter des orifices transversaux, pour l'un au moins du passage de connexions électriques, du passage d'entretoises, et/ou à l'équilibre des pressions dans le dispositif et à la circulation des gaz.

Le dispositif peut encore comporter un porte-électrode isolant, tel que décrit plus haut, portant une électrode d'extraction, ainsi qu'une électrode de focalisation, qui peut ne pas être portée par le porte-électrode précité. L'électrode de focalisation peut avoir une forme générale tronconique. Elle peut être portée par un autre porte-électrode. Elle peut être percée d'orifices pour l'équilibre des pressions dans le dispositif et à la circulation des gaz.

Entre les électrodes d'extraction des électrons et les électrodes d'accélération des noyaux et la cible, le dispositif peut comporter des antennes de radiofréquences. Les électrodes précédemment citées peuvent également servir d'antenne radiofréquence.

Faisceau

Le dispositif peut comporter une source d'électrons permettant de produire un faisceau d'électrons. Il peut s'agir par exemple d'une électrode, par exemple une cathode, et d'une électrode de masse permettant l'extraction des électrons d'une cible. L'électrode peut être la cible elle-même. Elle peut être portée à une température par exemple comprise entre 100°C et 4000°C, mieux entre 200°C et 1700°C. En variante encore, la cathode peut être une cathode à effet de champ.

L'application du deuxième champ magnétique permet l'orientation des moments magnétiques des électrons. Ainsi, on peut permettre à, par exemple, au moins 50%, par exemple au moins 75%, par exemple à sensiblement la totalité des particules constituant ledit faisceau d'avoir des moments magnétiques orientés.

On fait ainsi interagir le faisceau de noyaux et le faisceau d'électrons, les particules des deux faisceaux ayant leurs moments magnétiques alignés, dans l'espace confiné entre les deux doubles électrodes sous un champ magnétique avec ou sans gradient spatial et/ou temporel du champ magnétique.

La ou les électrodes d'extraction peuvent être réalisées en forme de grille métallique, par exemple dans l'un ou plusieurs des matériaux de la liste suivante, qui n'est pas limitative : tungstène, titane, tantale, or, platine, nickel, fer. L'électrode peut avoir un contour en matériau céramique ou plastique, permettant l'isolation des connexions les unes des autres. Dans un mode de réalisation, ces contours plastiques ou céramiques peuvent être percés pour favoriser la circulation des gaz dans l'enceinte du dispositif vers la pompe à vide.

Cible

Le dispositif peut comporter une cible contenant des électrons de conduction, destinée à recevoir les noyaux. Les moments magnétiques des électrons et des noyaux peuvent alors être alignés dans le même sens que la direction de la vitesse des noyaux incidents, ce qui peut permettre de favoriser la capture des électrons ainsi orientés par les noyaux du faisceau lors de leur collision au niveau de la cible, notamment à la surface de la partie métallique de la cible, là où se trouve les électrons libres de la mer électronique du métal, autrement dit les électrons de la couche de conduction. la cible peut contenir des matériaux ferromagnétiques et/ou superparamagnétiques. La cible peut être composée en partie ou intégralement de matériaux ferromagnétiques et/ou superparamagnétiques qui, combinés aux champs magnétiques, peuvent améliorer l'orientation et le maintien des moments magnétiques des électrons et des noyaux au moment de leur collision.

Les éléments à transmuter de la cible peuvent être des éléments de la partie métallique elle-même ou d'autres éléments contenus immédiatement derrière la partie métallique.

Cette partie métallique peut être fine, étant par exemple d'une épaisseur de l'ordre de 1 $\mu$m à quelques mètres (10 m par exemple), selon les applications souhaitées. Les applications peuvent être : production de radioéléments, transmutation des actinides et matériaux radioactifs, production d'énergie thermique par la capture neutronique.

La partie métallique de la cible peut également être reliée à une électrode de masse ou cathode.

Le dispositif peut encore comporter des moyens pour chauffer la cible contenant les électrons, comme explicité plus haut. Le dispositif peut encore comporter des moyens pour extraire la chaleur de la cible, comme explicité plus haut.

**Enceinte**

L'enceinte peut avoir un volume interne qui peut être compris entre 1 $mm^3$ et 100 $m^3$, mieux entre 1 $cm^3$ et 1 $m^3$, voire entre 10 $cm^3$ et 1 $dm^3$. L'enceinte peut être aussi bien petite que grande selon les applications recherchées et le nombre de neutrons à produire.

Vide et température

L'enceinte peut être portée à une pression par exemple inférieure ou égale à 1 Pa, par exemple inférieure à

$10^{-5}$ Pa ($10^{-7}$ mbar). Une enceinte ayant une pression faible permet de limiter la densité de particules et peut donc permettre de limiter les sources de perturbation potentielles des faisceaux.

De telles pressions peuvent, par exemple, être obtenues par l'utilisation de pompes à vide ioniques ou par tout autre moyen pouvant convenir à l'invention.

Le procédé selon l'invention peut avoir lieu dans une enceinte ne comportant sensiblement pas de matière autre que les particules destinées à entrer en collision.

Paroi de l'enceinte

On pourra choisir l'épaisseur et la nature du matériau constituant la paroi de l'enceinte de manière à contenir les rayonnements et particules produites après l'étape de capture électronique et/ou de collision, ainsi que les faisceaux éventuels destinés à être mis en collision. Au moins un matériau pour l'enceinte peut être choisi dans la liste suivante, qui n'est pas limitative : quartz, inox, titane, zircon.

Diaphragme de sortie

Le dispositif selon l'invention, notamment lorsqu'il est destiné à produire des neutrons libres, peut comporter un diaphragme de sortie. Par exemple dans le cas où le dispositif selon l'invention est relié à une autre enceinte sous vide, le diaphragme de sortie peut être un disque réalisé en matériaux interagissant peu avec les neutrons de manière à laisser passer le faisceau de neutrons. Le diaphragme de sortie peut par exemple être constitué, d'un ou plusieurs matériau(x) faiblement absorbeurs de neutrons. Le diaphragme de sortie peut comporter, par exemple du carbone, du magnésium, du plomb, de la silice, du zirconium ou de l'aluminium. Le diaphragme de sortie peut être de forme quelconque, par exemple circulaire, ovale, elliptique, polygonale.

Refroidissement et/ou récupération d'énergie

Le dispositif peut comporter des moyens de refroidissement et/ou des moyens de récupération d'énergie pour la production d'énergie, plus particulièrement d'énergie thermique primaire, notamment par un échangeur thermique. Cette énergie thermique primaire peut ensuite être transformée en énergie mécanique ou électrique selon les besoins et applications.

Dans le cas du refroidissement, l'échangeur thermique peut comporter un circuit fermé d'un ou plusieurs fluide(s) caloporteur(s). Il peut comporter des moyens de récupération de ces fluide(s) caloporteur(s). Le fluide caloporteur peut par exemple être choisi dans la liste suivante, qui n'est pas limitative : air, eau, huiles, et tout autre fluide caloporteur approprié à l'application envisagée.

Dans le cas de la récupération d'énergie, on peut utiliser un seul circuit ou en variante plusieurs circuits.

Dans le cas de l'utilisation d'un seul circuit, le fluide utilisé pour la récupération d'énergie peut changer d'état, par exemple, passer de l'état liquide à l'état gazeux. Dans ce cas il peut changer d'état sous une pression constante ou choisie selon le mode d'élaboration technique ou encore changer d'état à la pression ambiante en changeant de volume. Il peut donc changer de pression et de volume selon le mode de réalisation le plus approprié pour par exemple faire tourner une turbine, un moteur à piston ou encore par exemple être utiliser comme un moyen de propulsion.

On peut en variante utiliser plusieurs circuits, pour par exemple, éviter que la contamination radioactive d'un premier circuit n'affecte l'environnement immédiat du réacteur à neutron. On peut ainsi utiliser un second circuit, voire même un troisième circuit. Le dernier circuit fonctionne comme décrit ci-dessus dans le cas d'un circuit unique, permettant de récupérer l'énergie thermique produite à travers des échangeurs thermique successifs entre les différents circuits.

On peut utiliser ou transformer cette énergie sous forme d'énergie thermique et/ou sous forme d'énergie mécanique par le biais de turbines, pistons, moteurs de sterling ou tout autres systèmes appropriés ou encore en la transformant en énergie électrique par l'ajout de dispositifs connus, comme des alternateurs, aux systèmes de transformation en énergie mécanique précédemment cités.

Les fluides caloporteurs utilisés dans les circuits de récupération et d'échanges thermique peuvent être choisi parmi : eau, huiles, sels fondus ou tout type de matériau devenant fluide à des températures élevées comme par exemple le Sodium, plomb, sels. Chaque circuit peut comporter un fluide différent, le cas échéant.

Champs magnétiques

Les premier et deuxième champs magnétiques peuvent être orientés dans l'axe du dispositif ou perpendiculairement à ce dernier. De préférence, les premier et deuxième champs magnétiques sont parallèles à l'axe des faisceaux de noyaux et/ou d'électrons.

Par « gradient de champ magnétique », il faut comprendre une intensité de champ magnétique non homogène dans l'espace ou dans le temps. La variation spatiale ou temporelle peut être par exemple comprise entre 1 µT et 100 Teslas, mieux entre 1 mT et 50 Teslas, voire entre 1 Tesla et 10 Teslas. La taille de l'espace où le champ magnétique est appliqué peut être comprise entre 1 $nm^3$ et 100 $m^3$, mieux entre 1 $µm^3$ et 1 $m^3$, voire entre 1 $mm^3$ et 1 $dm^3$. Le champ magnétique peut être variable dans le temps, il peut varier lentement ou brusquement, sur des durées de temps longues ou courtes, par exemple sur une durée comprise entre 1 ps et 10 s, mieux entre 1 ns et 1 s, voire entre 1 µs et 10 ms, voire entre 10 µs et 1 ms.

Les moyens d'application du gradient du premier champ magnétique peuvent comporter un premier électroaimant pour produire le premier champ magnétique, comme explicité plus haut. En variante ou additionnellement, ces moyens peuvent comporter un générateur de radiofréquences.

Les moyens pour appliquer le deuxième champ magnétique auxdits électrons peuvent comporter un deuxième électroaimant pour produire le deuxième champ magnétique, comme explicité plus haut. En variante ou additionnellement, ces moyens peuvent comporter un générateur de radiofréquence. Les radiofréquences peuvent être comprises entre 1 MHz et 1000 GHz, mieux entre 5 MHz et 100 GHz. L'application de ce deuxième champ magnétique permet l'orientation des moments magnétique des électrons. Dans un exemple de réalisation, les radiofréquences peuvent être de 25 GHz pour un deuxième champ magnétique à 1Tesla.

Les interactions entre les noyaux et les électrons liés ou libres pour générer les captures électroniques peuvent avoir lieu au sein du champ du deuxième électroaimant.

Les moyens permettant de générer un ou plusieurs champ(s) magnétique(s) mis en oeuvre dans le procédé ou le dispositif selon l'invention peuvent être choisi parmi les bobines supraconductrices, les bobines résistives ou les bobines « hybrides » comportant une bobine résistive et une bobine supraconductrice. Il est aussi possible d'utiliser des circuits résonants, par exemple de type RLC, comportant au moins une bobine de résonance.

Champs magnétiques utilisés pour donner une orientation prédéfinie aux moments magnétiques

Le procédé selon l'invention peut comporter au moins une étape d'application d'au moins :

    i. un premier champ magnétique, configuré pour mettre les moments magnétique des noyaux dans un état défini, ayant une composante statique dans le temps d'intensité comprise entre 1 µT et 100 T et/ou un gradient non nul seulement sur l'axe de la collision, et

    ii. un second champ magnétique, configuré pour mettre les moments magnétique des électrons dans un état défini, ayant une composante statique dans le temps d'intensité comprise entre 1 µT et 100 T et/ou un gradient non nul seulement sur l'axe de la collision.

Les premier et second champs magnétiques peuvent être identiques ou distincts. Les premier et second champs magnétiques peuvent être générés par la même source ou par des sources distinctes.

Au moins l'un, par exemple chacun, des premier et second champs magnétiques peuvent être statiques.

En variante, au moins l'un, par exemple chacun, des premier et second champs magnétiques peuvent comporter une composante statique et une composante variable non nulle.

Dans la suite, pour un champ magnétique donné $\vec{B}$(x,y,z,t), on définit sa composante statique $\vec{B}_{stat}$ (x,y,z) et

sa composante variable $\underrightarrow{\underline{B}}$(x,y,z,t) comme vérifiant :

$$\vec{B}(x,y,z,t) = \vec{B}_{stat}(x,y,z) + \underrightarrow{\underline{B}}_t(x,y,z,t) \text{ où } \vec{B}_{stat}(x,y,z)$$ est une grandeur indépendante du temps et

$\underrightarrow{\underline{B}}_t(x,y,z,t)$ est une grandeur ne comportant aucun terme invariant en fonction du temps. En d'autres termes, le

spectre fréquentiel de $\underrightarrow{\underline{B}}$(x,y,z,t) ne comporte pas de pic centré sur la fréquence nulle.

*Composantes statiques*

Les caractéristiques relatives aux composantes statiques décrites ci-dessous sont aussi valables pour les champs magnétiques statiques ayant une composante variable nulle. La composante statique du premier champ magnétique peut par exemple avoir une intensité comprise entre 1 µT et 100 Tesla. La composante statique du second champ magnétique peut par exemple avoir une intensité comprise entre 1 µT et 100 Tesla. Des composantes statiques convenant à l'invention peuvent être générées par des bobines supraconductrices, des bobines résistives ou des bobines « hybrides » comportant une bobine résistive et une bobine supraconductrice.

Les premier et second champs magnétiques peuvent avoir des composantes variables différentes. Les composantes variables des premier et/ou second champ(s) magnétique(s) peuvent par exemple être appliquées sous la forme d'au moins un faisceau de photons. L'application d'une composante variable peut permettre, pour les particules mises enjeu, d'augmenter la proportion de moments magnétiques orientés dans le sens de la composante statique afin d'augmenter la probabilité de génération de neutrons ou de noyaux lors de la collision.

En effet, la théorie quantique prévoit que l'application d'au moins une composante variable ayant par exemple un spectre fréquentiel comportant au moins un pic centré sur une fréquence égale à la fréquence de résonance des moments magnétique peut par exemple permettre d'induire des transitions entre différents niveaux énergétiques. Cette fréquence de résonance correspond à la fréquence de précession des moments magnétique autour de la composante statique du champ appliqué, dite précession de Larmor. Il devient alors possible pour des moments magnétiques par exemple orientés, avant application de la composante variable, dans le sens inverse du sens d'application de la composante statique d'absorber au moins une partie de l'énergie de la composante variable appliquée et de transiter vers un état orienté où lesdits moments magnétiques sont alignés dans le même sens que la composante statique.

On peut par exemple appliquer la composante variable en même temps que la composante statique.

La mesure de la quantité de neutrons produits, de protons déviés ou du potentiel électrique créé par les protons n'ayant pas subi de collision peut, par exemple, permettre à un opérateur de disposer d'indicateurs sur la nécessité d'appliquer la composante variable des premier et/ou second champ(s) magnétique(s).

Les lignes de champs de la composante variable peuvent être colinéaires avec les faisceaux de particules. En variante, elles peuvent être non colinéaires aux lignes de champs de la composante statique. Elles peuvent, par exemple, former avec celles-ci un angle supérieur à 10°, par exemple supérieur à 45°. En particulier, les lignes de champ de la composante variable peuvent former un angle compris entre 85° et 95° avec les lignes de champ de la composante statique.

La composante variable du premier champ magnétique peut être appliquée de manière continue. En variante, la composante variable du premier champ magnétique peut être appliquée sous la forme d'impulsions dont l'homme du métier saura déterminer la durée. A titre indicatif, la durée des impulsions peut par exemple être comprise entre 0,01 $\mu$s et 1 s, par exemple entre 1 $\mu$s et 20 ms.

La composante variable du second champ magnétique peut être appliquée de manière continue. En variante, la composante variable du second champ magnétique peut être appliquée sous la forme d'impulsions dont l'homme du métier saura déterminer la durée. A titre indicatif, la durée des impulsions peut par exemple être comprise entre 0,01 $\mu$s et 1 s, par exemple entre 1 $\mu$s et 20 ms.

La composante variable du premier champ magnétique peut présenter un spectre fréquentiel comportant au moins un pic centré sur une fréquence par exemple comprise entre 1 Hz et 50 MHz, par exemple entre 50 Hz et 50 kHz, par exemple entre 100 Hz et 1 kHz.

Dans le cadre du procédé selon l'invention, la composante variable du second champ magnétique peut présenter un spectre fréquentiel comportant au moins un pic centré sur une fréquence par exemple comprise entre 1 Hz et 50 MHz, par exemple entre 50 Hz et 50 kHz, par exemple entre 100 Hz et 1 kHz

Les composantes variables des premier et second champs magnétiques peuvent être générées par des circuits résonants, par exemple de type RLC, comportant au moins une bobine de résonance.

*Gradients sur l'axe de la collision*

Comme mentionné plus haut, le premier et/ou second champ(s) magnétique(s) peu(ven)t avoir un gradient non nul sur l'axe de la collision.

La théorie quantique prévoit que l'application d'un champ magnétique ayant un gradient non nul peut permettre de mettre dans un état défini les moments magnétiques ainsi que de les aligner colinéairement avec le champ. Il est également important que l'angle entre la vitesse des particules, l'axe de la collision et les moments magnétiques soit faible, par exemple moins de 10°, voir inférieur à 5°, préférentiellement proche de 0°.

La direction du gradient peut former un angle sensiblement nul avec l'axe de la collision. Dans ce dernier cas, il est possible que le(s) premier et/ou second champ(s) magnétique(s) comporte(nt) chacun, en outre, une composante statique et une composante variable non nulle. Lesdites composantes statiques et variables peuvent être telles que décrites ci-dessus. Dans les deux cas, il est possible de séparer les particules selon la direction de leur moment magnétique. On peut alors obtenir à partir d'un même faisceau de particules soit un faisceau contenant des particules avec des moments magnétique orientés dans le même sens et le sens opposé du gradient appliqué soit une pluralité de faisceaux ayant chacun en leur sein des particules avec des moments magnétiques orientés dans un même sens.

Par ailleurs, les premier et/ou second champ(s) magnétique(s) peu(ven)t présenter, sur l'axe de la collision, un gradient d'intensité non nulle et par exemple inférieure à 1000 T/m. Les premier et/ou second champ(s) magnétique(s), ayant un gradient non nul sur l'axe de la collision, peu(ven)t être appliqué(s) de manière continue.

En variante, les premier et/ou second champ(s) magnétique(s), ayant un gradient non nul sur l'axe de la collision, peu(ven)t être appliqué(s) sous la forme d'impulsions.

Des gradients de champ magnétique convenant à l'invention peuvent par exemple être produits par deux entrefers similaires à ceux mis en oeuvre dans l'expérience de Stern et Gerlach ou par une pluralité de bobinages ayant des nombres de boucles différents et/ou des diamètres et/ou des courants différents.

### Production et récupération d'énergie

L'étape de capture et/ou de collision peut générer un dégagement d'énergie, par exemple sous forme de chaleur. La chaleur produite, lors de cette étape peut par exemple être récupérée par un échangeur thermique, comme explicité plus haut, dans lequel circule un ou plusieurs fluide(s) caloporteur(s).

Selon un autre de ses aspects, l'invention concerne un procédé de production d'énergie au moyen de l'un des procédés et/ou des dispositifs tels que décrits ci-dessus, dans lequel on récupère l'énergie produite.

Selon encore un autre de ses aspects, l'invention concerne l'utilisation des neutrons générés par les procédés et/ou les dispositifs tels que décrits ci-dessus pour produire de l'énergie. Etant lents et à fort rendement, les neutrons produits peuvent permettre de produire de l'énergie par la capture neutronique. En effet, il est établi que la transmutation des noyaux atomiques par capture neutronique est génératrice d'énergie. Cette source d'énergie peut atteindre un rendement économique exceptionnel et se substituer progressivement aux autres sources d'énergies. Le rendement de tels systèmes peut être supérieur à 200%, voire même à 1000% (une production de 10 fois l'énergie consommée), voire davantage.

On donne ci-dessous quelques exemples de capture neutronique, avec les énergies obtenues, d'après le site internet

http://www.nndc.bnl.gov/capgam/byn/page001.html. :

$n + p \rightarrow D + 2223,25 \pm 0,00$ keV

$2n + {}^{58}Ni \rightarrow {}^{60}Ni + 8998,63 \pm 0,07$ keV $+ 1332,54 \pm 0,05$ keV

$n + {}^{60}Ni \rightarrow {}^{61}Ni + 7819,56 \pm 0,06$ keV

$n + {}^{61}Ni \rightarrow {}^{62}Ni + 1172,8\ 0 \pm 0,10$ keV

### Utilisations

Les neutrons peuvent être utiles dans de nombreuses applications, notamment dans les domaines de l'imagerie, de la production de radio-isotopes pour l'industrie médicale et la filière énergie nucléaire pour laquelle les neutrons sont une source de production d'énergie, d'optimisation des réactions nucléaire, de la sécurité du fonctionnement des centrales et du traitement des déchets radioactifs comme les actinides mineurs.

Selon l'un de ses aspects, l'invention concerne une installation médicale, par exemple pour la destruction de cellules cancéreuses humaines ou animales, comportant au moins :

- un moyen de positionnement d'un patient à traiter, et
- un dispositif tel que défini plus haut.

Les neutrons générés selon l'invention peuvent ainsi par exemple être utilisés pour l'hadronthérapie ou par exemple pour la médecine nucléaire.

Selon encore un autre de ses aspects, l'invention permet de produire des radio-isotopes. Dans le domaine médical il existe deux utilisations majeures des radio-isotopes : l'imagerie par injection de radio-pharmaceutiques (traceurs) permettant de recueillir des images précises sur le métabolisme physiologique, ou de pratiquer certains actes médicaux et la stérilisation du matériel médical par rayonnement gamma. Les neutrons produits peuvent permettre de créer des rayons gamma utilisés dans la stérilisation des ustensiles chirurgicaux par exemple.

Selon encore un autre de ses aspects, l'invention concerne l'utilisation des neutrons générés par les procédés et/ou les dispositifs tels que décrits ci-dessus pour la transmutation nucléaire ou plus généralement l'obtention de noyaux en physique expérimentale, la production de radio-isotopes par la capture neutronique.

Selon encore un autre de ses aspects, l'invention concerne l'utilisation des neutrons générés par les procédés et/ou les dispositifs tels que décrits ci-dessus pour le traitement des déchets nucléaires par transmutation. Les neutrons produits, qui peuvent être rapides, peuvent être envoyés sur les déchets des réactions nucléaires afin d'obtenir des éléments radioactifs plus légers et à durée de vie plus courte et donc moins dangereux.

Selon encore un autre de ses aspects, l'invention concerne l'utilisation des neutrons générés par les procédés et/ou les dispositifs tels que décrits ci-dessus pour l'imagerie et l'analyse neutronique. On utilise dans ce cas plus particulièrement le dispositif permettant de produire un faisceau de neutrons. Les neutrons produits peuvent permettre de photographier, à travers les éléments, la structure de n'importe quel objet. Ce procédé permet une analyse fine de pièces industrielles. De même les neutrons produits peuvent permettre des analyses des sols et des sondages géologiques, par exemple certains forages exploratoires. Enfin l'analyse neutronique est utilisée à des fins militaires et de défense, puisque dans les mêmes conditions que pour les autres utilisations, une source de neutrons permet de détecter les explosifs, de quelque nature qu'ils soient.

Selon encore un autre de ses aspects, l'invention concerne l'utilisation des neutrons générés par les procédés et/ou les dispositifs tels que décrits ci-dessus pour la création de défaut dans les systèmes physico-chimiques. On utilise dans ce cas plus particulièrement le dispositif permettant de produire un faisceau de neutrons. Les neutrons produits peuvent permettre de tester la tenue à la radiation des appareils embarqués et instruments sous contrainte nucléaire.

Selon encore un autre de ses aspects, l'invention concerne l'utilisation des neutrons générés par les procédés et/ou les dispositifs tels que décrits ci-dessus dans une centrale nucléaire. Les neutrons produits peuvent permettre à faible coût de concevoir des centrales nucléaires de fission à fonctionnement sous-critique, ce qui permet d'éliminer le risque d'emballement nucléaire et le besoin d'enrichissement de l'uranium. Le risque nucléaire peut ainsi être considérablement réduit avec un coût de production de l'énergie plus faible. Ceci permet également de limiter la consommation des énergies fossiles.

## Description des figures

L'invention pourra être mieux comprise à la lecture de la description détaillée qui va suivre, d'exemples non limitatifs de mise en oeuvre de celle-ci, et à l'examen du dessin annexé, sur lequel :

- la figure 1 est une vue en perspective schématique et partielle d'un exemple de dispositif de production et/ou de capture de neutrons selon l'invention,
- la figure 2 en est une vue selon la flèche II,
- la figure 3 est une vue en coupe longitudinale selon III-III du dispositif des figures 1 et 2,

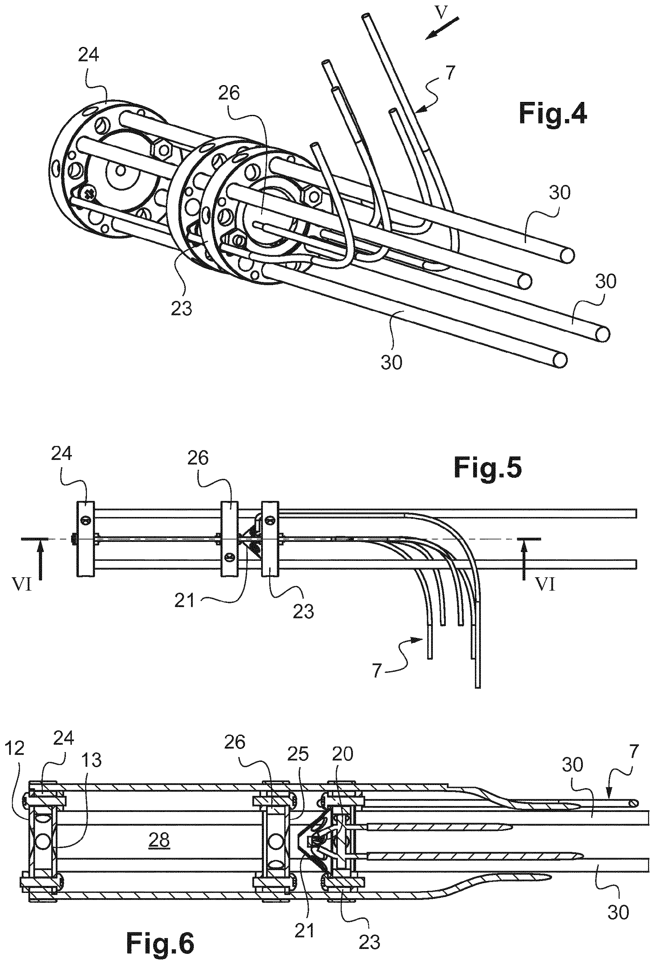

- la figure 4 est une vue en perspective schématique et partielle d'un détail du dispositif des figures 1 à 3,
- la figure 5 en est une vue selon la flèche V,
- la figure 6 est une vue en coupe longitudinale selon VI-VI du dispositif des figures 4 et 5,
- la figure 7 est une vue en perspective schématique et partielle d'un ensemble porte-électrode et ses électrodes,
- la figure 7a est une vue en perspective, schématique et partielle, de l'ensemble de la figure 7,
- la figure 7b est une vue en perspective, schématique et partielle, du porte-électrode des figures 7 et 7a,
- les figures 7c à 7e sont des vues respectivement selon les flèches C, D et E du porte-électrode des figures 7, 7a et 7b,
- la figure 8 est une vue en perspective schématique et partielle de la cible entourée de l'électrode associée,
- les figures 8a et 8b sont des vues respectivement selon les flèches A et B de la cathode de la figure 8, et
- les figures 9 et 10 sont des vues analogues à la figure 3 de variantes de réalisation.

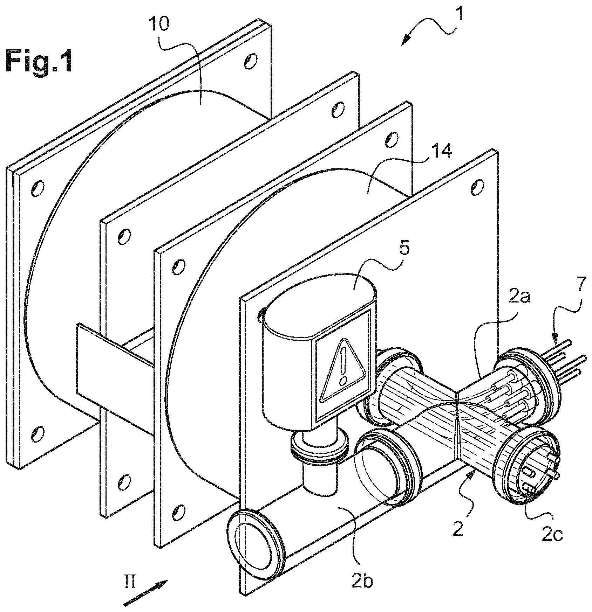

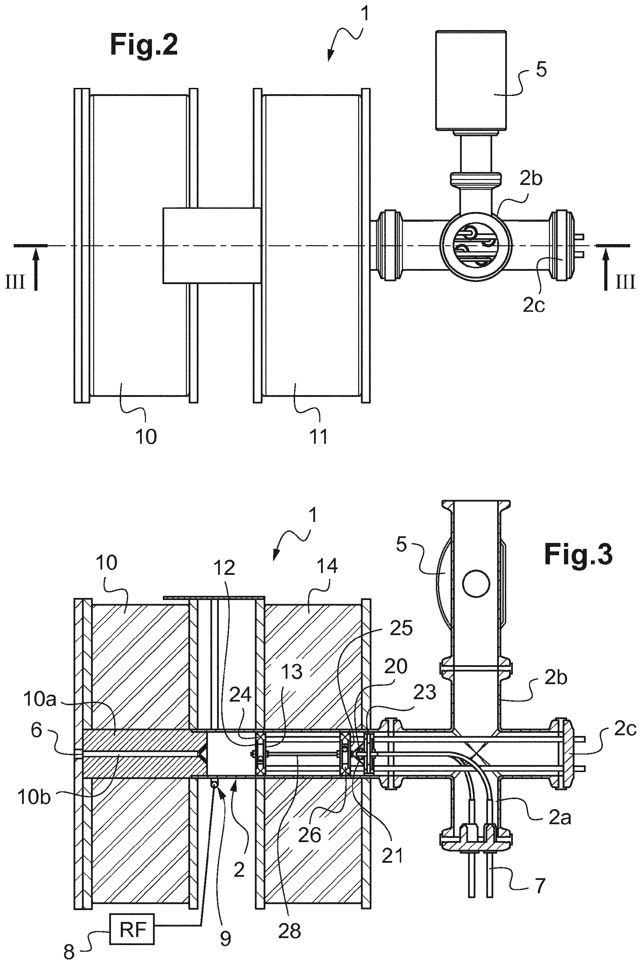

On a illustré schématiquement aux figures 1 à 3 un dispositif 1 conforme à l'invention, comportant une enceinte 2 dans laquelle on peut disposer de noyaux sous une pression contrôlée par une jauge de vide 5. L'enceinte 2 a une forme générale de cylindre, et comporte vers son extrémité de sortie 2c deux embranchements latéraux 2a et 2b, l'un 2a permettant le passage des connexions électriques 7, et l'autre 2b l'évacuation des gaz vers la pompe à vide non représentée. L'extrémité de sortie 2c peut servir de sortie pour les neutrons produits et/ou d'entrée et de sortie pour un fluide caloporteur servant au refroidissement et/ou à la récupération d'énergie dans le ou les échangeurs thermiques.

Les noyaux peuvent être choisis parmi les protons (noyaux d'hydrogène), deutérons (noyaux de deutérium) et/ou tritons (noyaux de tritium) et sont obtenus par exemple en introduisant dans l'enceinte un gaz neutre d'hydrogène ou de deutérium et/ou de tritium par une entrée de gaz 6. Le gaz peut être transformé en plasma au moyen d'un générateur de radiofréquences 8 comportant une antenne 9 entourant l'enceinte 2.

Le dispositif 1 comporte en outre des moyens d'application d'un gradient d'un premier champ magnétique spatial et/ou temporel, de manière à donner une orientation prédéfinie aux moments magnétiques des noyaux présents dans l'enceinte 2. Il s'agit dans l'exemple décrit d'un électroaimant 10 avec noyau 10a. Le noyau 10a comporte un canal 10b permettant l'entrée du gaz.

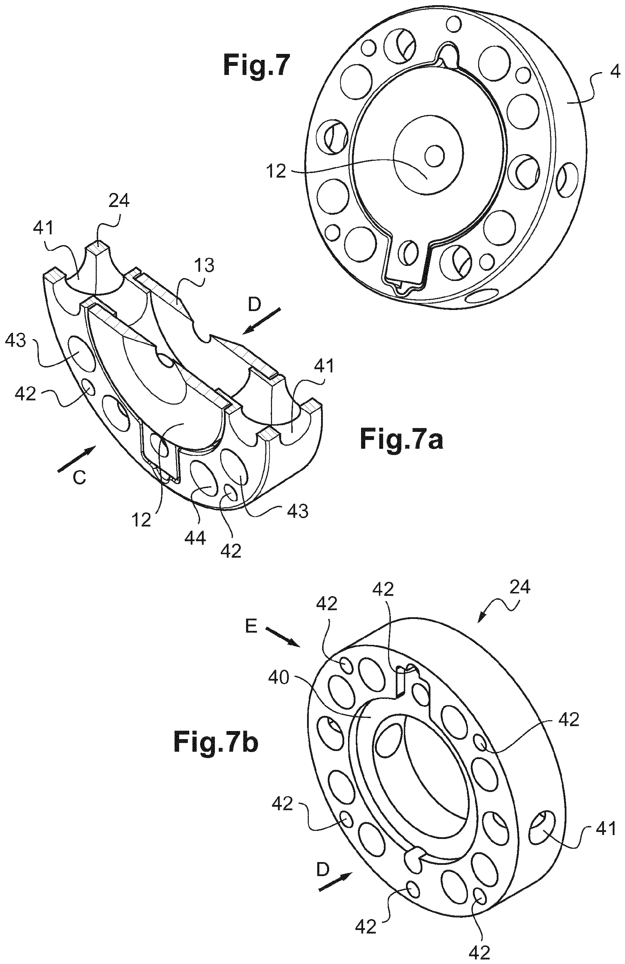

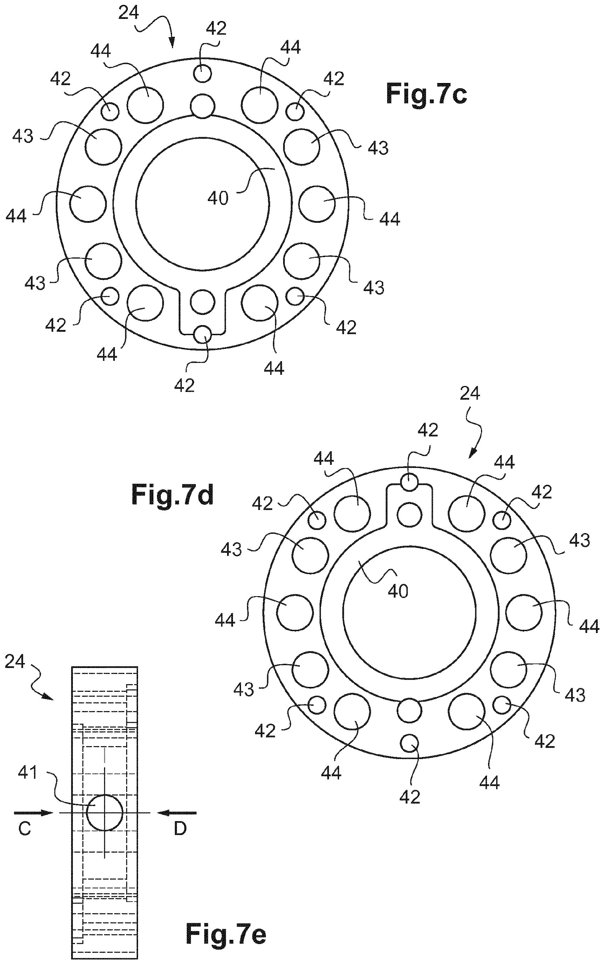

Le dispositif 1 comporte également des moyens pour appliquer un champ électrique afin d'extraire lesdits noyaux et diriger les noyaux ainsi extraits vers des électrons. Il s'agit dans l'exemple décrit d'une électrode 12, qui est une anode dans l'exemple décrit, associé à une masse 13 disposée de l'autre côté d'un porte-électrode 24 isolant, comme illustré plus en détails aux figures 7 et 7a à 7e.

Comme on peut le voir sur ces figures, l'électrode 12 et la masse 13 sont identiques, à leur polarité près, et le porte-électrode 24 a une forme de couronne, comportant deux logements 40 pour l'électrode 12 et la masse 13, qui sont de forme identique.

En outre, le porte-électrode 24 est percé d'orifices radiaux 41, au nombre de deux dans l'exemple décrit, et qui sont diamétralement opposés. Ces orifices radiaux 41 peuvent servir à la fixation du porte-électrode dans le dispositif.

Le porte-électrode 24 comporte également des orifices transversaux 42, 43 et 44. Les orifices 42 peuvent servir au passage des connexions électriques 7, sur les côtés de l'enceinte 2, étant les plus éloignés de l'axe central de l'enceinte. Ces orifices 42 sont également de plus petit diamètre. Ils sont dans l'exemple décrit au nombre de six, étant disposés symétriquement autour de l'axe central de l'enceinte.

Les orifices transversaux 43 peuvent servir au passage d'entretoises 30, lesquelles permettent le maintien des électrodes et du support de la cible. Ces entretoises peuvent être utilisées pour la circulation d'un ou plusieurs fluide(s) caloporteur(s) et l'extraction de la chaleur produite dans le dispositif. Ils sont au nombre de quatre dans cet exemple, de même que les entretoises 30, et sont disposés symétriquement autour de l'axe central de l'enceinte.

Enfin, les autres orifices transversaux 44 peuvent être maintenus libres, pouvant servir ainsi à l'équilibre des pressions dans le dispositif et à la circulation des gaz. Ils sont au nombre de six dans l'exemple décrit, étant disposés symétriquement autour de l'axe central de l'enceinte.

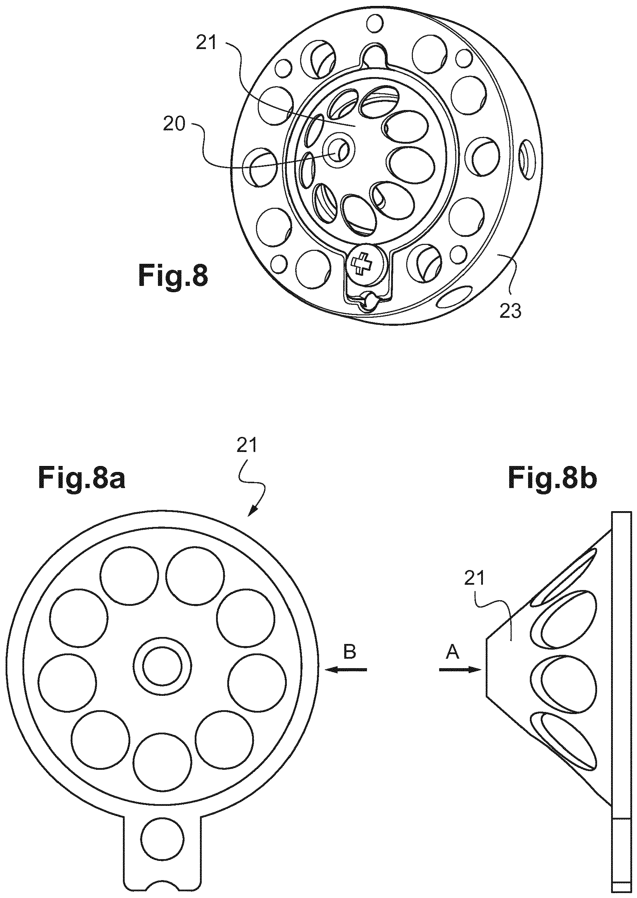

Les électrons susmentionnés sont dans l'exemple décrit issus d'un faisceau d'électrons extrait d'une cible 20 maintenue par un porte-électrode 23 isolant, à l'arrière d'une électrode d'extraction 25 et d'une électrode de focalisation 21. L'électrode de focalisation 21 a une forme générale tronconique, comme illustré sur les figures 8a et 8b. L'électrode d'extraction 25 est maintenue sur un porte-électrode 26, identique au porte-électrode 24 précédemment décrit en détails, et la cible et l'électrode de focalisation 21 sont maintenue sur le porte-électrode 23, également identique aux porte-électrodes 24 et 26. Les orifices radiaux 41 peuvent également servir pour fixer la cible 20 dans le porte-électrode 23 comme illustré sur les figures 8, 9 et 10.

L'électrode de focalisation 21 peut être dans l'exemple décrit une cathode, portée par exemple à un potentiel de - 300V, l'électrode d'extraction 25 étant alors une masse. Dans une variante, il pourrait bien entendu en être autrement, l'électrode de focalisation 21 étant portée à la masse et l'électrode d'extraction 25 étant une anode, par exemple portée à un potentiel d'environ + 300 V. L'électrode d'extraction 25 peut ainsi être portée à différents potentiels selon la mode d'utilisation : masse, ou positive. L'électrode de focalisation 21, illustrée plus en détails à la figure 8, est une cathode ou une masse.

Les électrons issus de la cible 20 sont extraits de la cible par l'action de l'électrode d'extraction 25 qui est reliée à la masse ou portée à un potentiel positif, et focalisés en direction des noyaux au moyen de l'électrode de focalisation 21, qui est une cathode dans cet exemple, ou une masse.

Le dispositif pourrait ne comporter qu'une électrode parmi l'électrode d'extraction et l'électrode de focalisation, sans que l'on sorte du cadre de la présente invention.

Chacune des électrodes peuvent être réalisées en forme de grille métallique, et est portée par un porte-électrode correspondant avec un contour en matériau céramique ou plastique, permettant l'isolation des connexions les unes des autres.

La collision a lieu dans l'espace intermédiaire 28 entre les électrodes 13 et 25 toutes deux reliées à la masse, dans le cas où les électrons sont émis sous forme de faisceau.

Le dispositif comporte, à la suite de l'électro-aimant avec noyau 10 et des électrodes 12 et 13, des moyens pour appliquer un deuxième champ magnétique auxdits électrons de manière à donner une orientation prédéfinie aux moments magnétiques des électrons. Il s'agit dans l'exemple décrit d'un électroaimant sans noyau 14. Au coeur de cet électroaimant 14 sont disposées l'électrode 13 (masse), l'électrode 25 (masse), l'électrode 21 (cathode) et la cible 20 sur son support 23, comme illustré. Ainsi, les électrons sont soumis au deuxième champ magnétique avant leur collision avec les noyaux provenant du plasma.

On obtient alors en sortie un faisceau de neutrons, que l'on peut récupérer à l'extrémité 2c de l'enceinte 2.

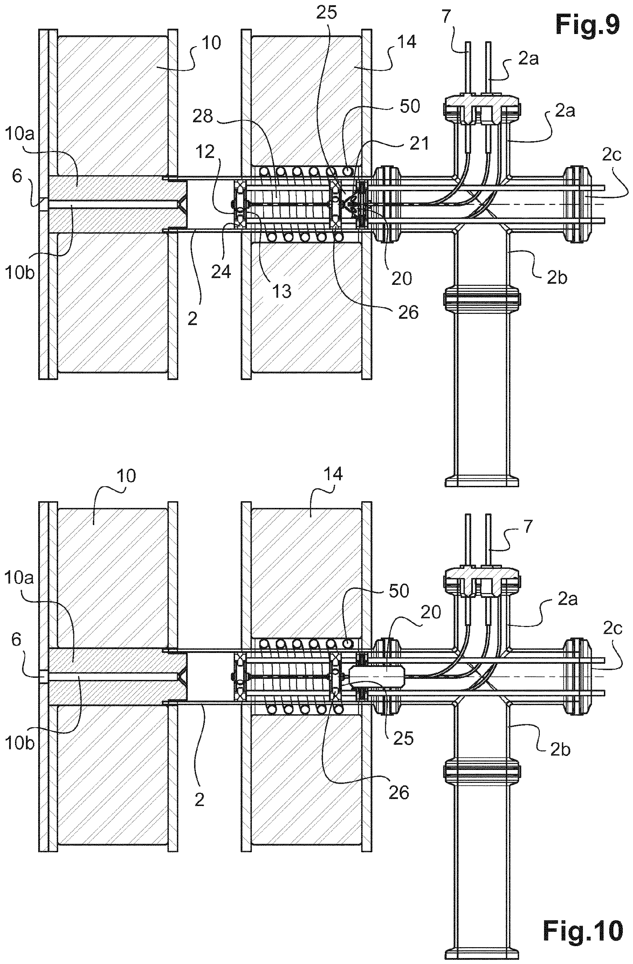

Dans la variante de réalisation illustrée à la figure 9, le dispositif peut comporter une antenne de radiofréquences 50 spécifique pour moduler le deuxième champ magnétique, de telle sorte que les électrons sont soumis à la combinaison du deuxième champ magnétique de l'électroaimant 14 et de la radiofréquence émise par l'antenne 50. Cette antenne 50 est disposée à l'intérieur de l'aimant 14, autour de l'enceinte 2.

Dans les exemples qui viennent d'être décrits, on obtient la production d'un faisceau de neutrons, par la capture des électrons ayant été extraits de la cible 20 par les noyaux du faisceau.

Les électrons peuvent en variante être contenus dans la cible, laquelle est dans ce cas destinée à recevoir les noyaux. Dans ce cas, la collision électron / noyaux peut avoir lieu directement sur ou dans la cible 20 pour générer des neutrons grâce à l'alignement des moments magnétiques de ces derniers, et on peut obtenir une transmutation des atomes (noyaux) de la cible par la capture des neutrons produits. Dans cet exemple de réalisation de production et de capture neutronique directement dans la cible, les électrodes et/ou masse 12, 13, et 25 peuvent servir d'antennes radiofréquence, afin d'améliorer le taux d'alignement des moments magnétiques des noyaux et/ou des électrons de la cible, et ainsi augmenter le nombre de neutrons produits. A cet effet, elles peuvent dans la variante illustrée à la figure 10 être connectées à un générateur de radiofréquences adéquat.

A titre d'exemple, on a illustré à la figure 10 un dispositif qui diffère de ceux précédemment décrits par la présence d'une cible 20 dépourvu d'électrode 21, et qui est connectée à la masse. En outre, l'électrode 25 ne sert qu'à la production de radiofréquences et n'est pas soumise à un voltage fixe. Dans une variante de réalisation non illustrée, cette électrode 25 pourrait même être supprimée.

La cible 20 peut avoir une forme allongée, notamment en direction de la sortie 2c, de manière à faciliter la transmutation du plus grand nombre d'atomes possible. La cible 20 peut être solide, ou fluide, étant liquide ou comportant une poudre.

## Revendications

1. Procédé de production et/ou de capture de neutrons, comportant les étapes suivantes :

   a) Soumettre des noyaux choisis parmi les protons, deutérons et/ou tritons à un champ électrique, les noyaux étant obtenus en créant un plasma ou au moyen d'une source de noyaux, afin d'extraire lesdits noyaux et diriger les noyaux ainsi extraits vers une cible (20) contenant des électrons libres,
   b) Soumettre lesdits noyaux à un gradient spatial et/ou temporel d'un premier champ magnétique de manière à donner une orientation prédéfinie aux moments magnétiques des noyaux, et
   c) Soumettre la cible à un deuxième champ magnétique de manière à donner une orientation prédéfinie aux moments magnétiques des électrons libres de la cible.

2. Procédé selon la revendication précédente, dans lequel les moments magnétiques des noyaux et les moments magnétiques des électrons libres sont alignés dans le même sens, ou sont parallèles au sens de déplacement des noyaux vers la cible, étant dans le même sens ou dans le sens opposé.

3. Procédé selon l'une des revendications précédentes, dans lequel les noyaux sont obtenus en créant un plasma d'hydrogène et/ou de deutérium et/ou de tritium par application de radiofréquences ou d'une décharge électrique.

4. Procédé selon l'une des revendications précédentes, dans lequel on soumet lesdits noyaux à des radiofréquences de manière à donner une orientation prédéfinie aux moments magnétiques des noyaux, et/ou dans lequel la cible contient des matériaux ferromagnétiques et/ou superparamagnétiques et on soumet la cible à un champ magnétique de manière à donner une orientation prédéfinie aux moments magnétiques des électrons libres de la cible, et/ou dans lequel on soumet la cible à des radiofréquences de manière à donner une orientation prédéfinie aux moments magnétique des électrons libres de la cible, procédé dans lequel on applique notamment les radiofréquences à l'aide d'un générateur de radiofréquences (8), à une fréquence comprise entre 10 kHz et 50 GHz.

5. Procédé selon l'une quelconque des revendications précédentes, dans lequel le champ électrique appliqué est obtenu par une ou plusieurs électrode(s), notamment un couple d'électrodes anode/masse (12, 13), le couple d'électrodes étant porté par un porte-électrode (24).

6. Procédé selon l'une quelconque des revendications précédentes, dans lequel le premier champ magnétique appliqué a un gradient spatial compris entre 0,001 Tesla/mètre et 1000 Tesla/mètre sur le volume d'une enceinte (2) contenant lesdits noyaux.

7. Procédé selon l'une quelconque des revendications précédentes, dans lequel les électrons libres de la cible sont soumis à un gradient spatial et/ou temporel du deuxième champ magnétique, et/ou dans lequel la cible (20) est métallique, et/ou dans lequel la cible (20) est chauffée à une température qui est comprise entre 100°C et 4000°C, mieux entre 200°C et 1700°C.

8. Dispositif de production et/ou de capture de neutrons, comportant :

   a) une enceinte (2) dans laquelle on peut disposer de noyaux choisis parmi les protons, deutérons et/ou tritons et une cible (20) contenant des électrons libres,
   b) des moyens d'application d'un gradient d'un premier champ magnétique spatial et/ou temporel, de manière à donner une orientation prédéfinie aux moments magnétiques des noyaux présents dans l'enceinte,
   c) des moyens pour appliquer un champ électrique afin d'extraire lesdits noyaux et diriger les noyaux ainsi extraits vers les électrons libres de la cible, et
   d) des moyens pour appliquer un deuxième champ magnétique auxdits électrons de manière à donner une orientation prédéfinie aux moments magnétiques des électrons,

les moyens pour appliquer le champ électrique comportant une ou plusieurs électrode(s) et une ou plusieurs masse(s), notamment un couple d'électrodes anode/masse (12,13), chaque électrode ou couple d'électrodes étant porté par un porte-électrode (24, 23, 26).

**9.** Dispositif selon la revendication précédente, dans lequel les moyens d'application d'un gradient d'un premier champ magnétique spatial et/ou temporel et les moyens pour appliquer un deuxième champ magnétique auxdits électrons sont configurés de telle sorte que les moments magnétiques des noyaux et les moments magnétiques des électrons libres sont alignés dans le même sens, ou sont parallèles au sens de déplacement des noyaux dans l'enceinte, étant dans le même sens ou dans le sens opposé.

**10.** Dispositif selon l'une quelconque des revendications 8 à 9, comportant un générateur de radiofréquences entourant l'enceinte, permettant de créer un plasma d'hydrogène ou de deutérium et/ou de tritium dans l'enceinte.

**11.** Dispositif selon l'une quelconque des revendications 8 à 10, les moyens d'application du gradient du premier champ magnétique comportant un premier électroaimant (10) pour produire le premier champ magnétique.

**12.** Dispositif selon l'une quelconque des revendications 8 à 11, les moyens pour appliquer le champ électrique comportant un ou plusieurs couples d'électrodes anode/masse (12, 13, 21, 25), chaque couple d'électrodes étant porté par un porte-électrode (24, 23, 26), le porte-électrode (24, 23, 26) ayant notamment une forme de couronne, comportant deux logements pour l'électrode et la masse, qui peuvent être de forme identique, le porte-électrode (24, 23, 26) comportant notamment des orifices transversaux, pour l'un au moins du passage de connexions électriques, du passage d'entretoises, et/ou à l'équilibre des pressions dans le dispositif et à la circulation des gaz.

**13.** Dispositif selon l'une quelconque des revendications 8 à 12, les moyens pour appliquer le deuxième champ magnétique auxdits électrons comportant un deuxième électroaimant (14) pour produire le deuxième champ magnétique.

**14.** Dispositif selon l'une quelconque des revendications 8 à 13, comportant une source d'électrons permettant de produire un faisceau d'électrons, et/ou le dispositif comportant une cible (20) contenant des électrons, destinée à recevoir les noyaux, et/ou la cible contenant des matériaux ferromagnétiques et/ou superparamagnétiques.

**15.** Dispositif selon l'une quelconque des revendications 8 à 14, comportant des moyens de refroidissement et/ou des moyens de récupération d'énergie pour la production d'énergie, notamment par un échangeur thermique.

**Patentansprüche**

**1.** Verfahren zum Herstellen und/oder Einfangen von Neutronen, das die folgenden Schritte umfasst:

a) Beaufschlagen von Kernen, ausgewählt aus Protonen, Deuteronen und/oder Tritonen, mit einem elektrischen Feld, wobei die Kerne durch Erzeugung eines Plasmas oder mittels einer Quelle von Kernen erhalten werden, um die Kerne zu extrahieren und die so extrahierten Kerne zu einem freie Elektronen enthaltenden Ziel (20) zu leiten,

b) Beaufschlagen der Kerne mit einem Raum- und/oder Zeitgradienten eines ersten Magnetfelds, um den magnetischen Momenten der Kerne eine vordefinierte Ausrichtung zu verleihen, und

c) Beaufschlagen des Ziels mit einem zweiten Magnetfeld, um den magnetischen Momenten der freien Elektronen des Ziels eine vordefinierte Ausrichtung zu verleihen.

**2.** Verfahren nach dem vorhergehenden Anspruch, wobei die magnetischen Momente der Kerne und die magnetischen Momente der freien Elektronen in die gleiche Richtung ausgerichtet sind oder parallel zur Bewegungsrichtung der Kerne zu dem Ziel, sei es in die gleiche Richtung oder in die entgegengesetzte Richtung, sind.

**3.** Verfahren nach einem der vorhergehenden Ansprüche, wobei die Kerne durch Erzeugung eines Wasserstoff- und/oder Deuterium- und/oder Tritiumplasmas durch Anlegen von Hochfrequenzen und/oder einer elektrischen Entladung erhalten werden.

**4.** Verfahren nach einem der vorhergehenden Ansprüche, wobei die Kerne mit Hochfrequenzen beaufschlagt werden, um den magnetischen Momenten der Kerne eine vordefinierte Ausrichtung zu verleihen, und/oder wobei das Ziel ferromagnetische und/oder superparamagnetische Materialien enthält und das Ziel mit einem Magnetfeld beaufschlagt wird, um den magnetischen Momenten der freien Elektronen des Ziels eine vordefinierte Ausrichtung zu verleihen, und/oder wobei das Ziel mit Hochfrequenzen beaufschlagt wird, um den magnetischen Momenten der freien Elektronen des Ziels eine vordefinierte Ausrichtung zu verleihen, wobei bei dem Verfahren insbesondere Hochfrequenzen mittels eines Hochfrequenzgenerators (8) mit einer Frequenz zwischen 10 kHz und 50 GHz angelegt werden.

5. Verfahren nach einem der vorhergehenden Ansprüche, wobei das angelegte elektrische Feld durch eine oder mehrere Elektroden, insbesondere ein Anoden-/Massen-Elektrodenpaar (12, 13), erhalten wird, wobei das Elektrodenpaar von einem Elektrodenhalter (24) getragen wird.

6. Verfahren nach einem der vorhergehenden Ansprüche, wobei das erste angelegte Magnetfeld einen Raumgradienten zwischen 0,001 Tesla/Meter und 1000 Tesla/Meter über das Volumen eines die Kerne enthaltenden Behältnisses (2) aufweist.

7. Verfahren nach einem der vorhergehenden Ansprüche, wobei die freien Elektronen des Ziels mit einem Raum- und/oder Zeitgradienten des zweiten Magnetfelds beaufschlagt werden und/oder wobei das Ziel (20) metallisch ist und/oder wobei das Ziel (20) auf eine Temperatur erhitzt wird, die zwischen 100°C und 4000°C, besser zwischen 200°C und 1700°C, liegt.

8. Vorrichtung zum Erzeugen und/oder Einfangen von Neutronen, umfassend:

   a) ein Behältnis (2), in dem aus Protonen, Deuteronen und/oder Tritonen ausgewählte Kerne und ein freie Elektronen enthaltendes Ziel (20) angeordnet werden können,
   b) Mittel zum Anlegen eines Raum- und/oder Zeitgradienten eines ersten Magnetfelds, um den magnetischen Momenten der in dem Behältnis vorhandenen Kerne eine vordefinierte Ausrichtung zu verleihen,
   c) Mittel zum Anlegen eines elektrischen Felds, um die Kerne zu extrahieren und die so extrahierten Kerne zu den freien Elektronen des Ziels zu leiten, und
   d) Mittel zum Anlegen eines zweiten Magnetfelds an die Elektronen, um den magnetischen Momenten der Elektronen eine vordefinierte Ausrichtung zu verleihen,

   wobei die Mittel zum Anlegen des elektrischen Felds eine oder mehrere Elektroden und eine oder mehrere Massen, insbesondere ein Anoden-/Massen-Elektrodenpaar (12, 13), umfassen, wobei jede Elektrode oder jedes Elektrodenpaar von einem Elektrodenhalter (24, 23, 26) getragen wird.

9. Vorrichtung nach dem vorhergehenden Anspruch, wobei die Mittel zum Anlegen eines Raum- und/oder Zeitgradienten eines ersten Magnetfelds und die Mittel zum Anlegen eines zweiten Magnetfelds an die Elektronen so konfiguriert sind, dass die magnetischen Momente der Kerne und die magnetischen Momente der freien Elektronen in die gleiche Richtung ausgerichtet sind, oder parallel zur Bewegungsrichtung der Kerne in dem Behältnis, sei es in die gleiche Richtung oder in die entgegengesetzte Richtung, sind.

10. Vorrichtung nach einem der Ansprüche 8 bis 9, die einen das Behältnis umgebenden Hochfrequenzgenerator umfasst, der das Erzeugen eines Wasserstoff- oder Deuterium- oder Tritiumplasmas in dem Behältnis gestattet.

11. Vorrichtung nach einem der Ansprüche 8 bis 10, wobei die Mittel zum Anlegen des Gradienten des ersten Magnetfelds einen ersten Elektromagneten (10) zum Erzeugen des ersten Magnetfelds umfassen.

12. Vorrichtung nach einem der Ansprüche 8 bis 11, wobei die Mittel zum Anlegen des elektrischen Felds ein oder mehrere Anoden-/Massen-Elektrodenpaare (12, 13, 21, 25) umfassen, wobei jedes Elektrodenpaar von einem Elektrodenhalter (24, 23, 26) getragen wird, wobei der Elektrodenhalter (24, 23, 26) insbesondere eine Kranzform aufweist, die zwei Aufnahmen für die Elektrode und die Masse umfasst, die identischer Form sein können, wobei der Elektrodenhalter (24, 23, 26) insbesondere Queröffnungen für mindestens eines von Hindurchführen von elektrischen Verbindungen, Hindurchführen von Distanzstücken und/oder zum Ausgleichen der Drücke in der Vorrichtung und/oder für die Zirkulation der Gase umfasst.

13. Vorrichtung nach einem der Ansprüche 8 bis 12, wobei die Mittel zum Anlegen des zweiten Magnetfelds an die Elektronen einen zweiten Elektromagneten (14) zum Erzeugen des zweiten Magnetfelds umfassen.

**14.** Vorrichtung nach einem der Ansprüche 8 bis 13, die eine Elektronenquelle umfasst, welche das Erzeugen eines Elektronenstrahls gestattet und/oder wobei die Vorrichtung ein Elektronen enthaltendes Ziel (20), das die Kerne aufnehmen soll, und/oder das ferromagnetische und/oder superparamagnetische Materialien enthaltende Ziel umfasst.

**15.** Vorrichtung nach einem der Ansprüche 8 bis 14, die Kühlmittel und/oder Energierückgewinnungsmittel für die Erzeugung von Energie, insbesondere durch einen Wärmetauscher, umfasst.

**Claims**

**1.** A method for producing and/or capturing neutrons, comprising the following steps:

a) subjecting nuclei chosen from among protons, deuterons and/or tritons to an electrical field, the nuclei being obtained by creating a plasma or by means of a source of nuclei, in order to extract said nuclei and direct the duly extracted nuclei toward a target (20) containing free electrons,
b) subjecting said nuclei to a spatial and/or temporal gradient of a first magnetic field so as to give a predefined orientation to the magnetic moments of the nuclei, and
c) subjecting the target to a second magnetic field so as to give a predefined orientation to the magnetic moments of the free electrons of the target.

**2.** The method as claimed in the preceding claim, in which the magnetic moments of the nuclei and the magnetic moments of the free electrons are aligned in the same direction, or are parallel to the direction of displacement of the nuclei toward the target, being in the same direction or in the opposite direction.

**3.** The method as claimed in one of the preceding claims, in which the nuclei are obtained by creating a plasma of hydrogen and/or of deuterium and/or of tritium by application of radiofrequencies or of an electrical discharge.

**4.** The method as claimed in one of the preceding claims, in which said nuclei are subjected to radiofrequencies so as to give a predefined orientation to the magnetic moments of the nuclei, and/or in which the target contains ferromagnetic and/or superparamagnetic materials and the target is subjected to a magnetic field so as to give a predefined orientation to the magnetic moments of the free electrons of the target, and/or in which the target is subjected to radiofrequencies so as to give a predefined orientation to the magnetic moments of the free electrons of the target, method . in which the radiofrequencies may be applied using a radiofrequency generator (8), at a frequency lying between 10 kHz and 50 GHz.

**5.** The method as claimed in any one of the preceding claims, in which the electrical field applied is obtained by one or more electrode(s), in particular a pair of anode/ground electrodes (12, 13), the pair of electrodes being borne by an electrode holder (24).

**6.** The method as claimed in any one of the preceding claims, in which the first magnetic field applied has a spatial gradient lying between 0.001 Tesla/meter and 1000 Tesla/meter over the volume of an enclosure (2) containing said nuclei.

**7.** The method as claimed in any one of the preceding claims, in which the free electrons of the target are subjected to a spatial and/or temporal gradient of the second magnetic field, and/or in which the target (20) is metal, and/or in which the target (20) is heated to a temperature which lies between 100°C and 4000°C, better between 200°C and 1700°C.

**8.** A device for producing and/or capturing neutrons, comprising:

a) an enclosure (2) in which the nuclei chosen from among protons, deuterons and/or tritons and a target (20) containing free electrons can be placed,
b) means for applying a spatial and/or temporal gradient of a first magnetic field so as to give a predefined orientation to the magnetic moments of the nuclei present in the enclosure,
c) means for applying an electrical field in order to extract said nuclei and direct the duly extracted nuclei toward the free electrons of the target, and
d) means for applying a second magnetic field to said electrons so as to give a predefined orientation to the magnetic moments of the electrons, the means for applying the magnetic field comprising one or more electrode(s) and one or more ground(s), in particular one or more pairs of anode/ground electrodes (12, 13), each electrode or pair of electrodes being borne by an electrode holder (24, 23, 26).

9. The device as claimed in the preceding claim, in which the means for applying a spatial and/or temporal gradient of a first magnetic field and the means for applying a second magnetic field to said electrons are configured so that the magnetic moments of the nuclei and the magnetic moments of the free electrons are aligned in the same direction, or are parallel to the direction of displacement of the nuclei in the enclosure, being in the same direction or in the opposite direction.

10. The device as claimed in any one of claims 8 to 9, comprising a radiofrequency generator surrounding the enclosure, making it possible to create a plasma of hydrogen or of deuterium and/or tritium in the enclosure.

11. The device as claimed in any one of claims 8 to 10, the means for applying the gradient of the first magnetic field comprising a first electromagnet (10) to produce the first magnetic field.

12. The device as claimed in any one of claims 8 to 11, the means for applying the electrical field comprising one or more pairs of anode/ground electrodes (12, 13, 21, 25), each pair of electrodes being borne by an electrode holder (24, 23, 26), the electrode holder (24, 23, 26) being in particular in the form of a ring, comprising two housings for the electrode and the ground, which can be of identical form, the electrode holder (24, 23, 26) comprising in particular transverse orifices, for at least one out of passage for electrical connections, passage for spacers, and/or to balance pressures in the device and for the circulation of the gases.

13. The device as claimed in any one of claims 8 to 12, the means for applying the second magnetic field to said electrons comprising a second electromagnet (14) to produce the second magnetic field.

14. The device as claimed in any one of claims 8 to 13, comprising a source of electrons making it possible to produce an electron beam, and/or the device comprising a target (20) containing electrons, intended to receive the nuclei, and/or the target containing ferromagnetic and/or superparamagnetic materials.

15. The device as claimed in any one of claims 8 to 14, comprising cooling means and/or energy harvesting means for the production of energy, in particular for a heat exchanger.

**Fig.1**

# Fig.2

# Fig.3

Fig.4

Fig.5

Fig.6

Fig.7

Fig.7a

Fig.7b

24

42 44

42 44 42

43 43

44 40 44

43 43

42 42

44 44

42

**Fig.7c**

24

42 44

**Fig.7d** 44 42 42

43 43

44 40 44

43 43

42 42

44 44

42

24

41

C D

**Fig.7e**

**Fig.8**

**Fig.8a**

**Fig.8b**

Fig.9

Fig.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011064739 A
- WO 2009052330 A
- WO 9905683 A
- EP 2360997 A
- US 20140326711 A

**Littérature non-brevet citée dans la description**

- **MILEY.** *Ion Gun Injection In Support Of Fusion Ship II Research And Development*
- **KISS.** *Modified extraction geometry in a radio-frequency ion source*